# EUROPEAN PATENT APPLICATION

(11) **EP 4 583 550 A1**
(43) Date of publication of application: **09.07.2025**
(21) Application number: 24168829.0
(22) Date of filing: 05.04.2024
(51) Int. Cl.: H04W 4/33, H04L 25/02, H04W 84/12, H04W 4/38, H04W 88/06, G01S 13/00, H04W 84/18, G01S 7/00

(54) **WI-FI SENSING MODULE**

(30) Priority: 08.01.2024 US 202418406449; 08.01.2024 EP 24150706
(71) Applicant: Nami Ai Pte Ltd, 039190 Centennial Tower 17.05 (SG)
(72) Inventor: LEROY, Jerome, 039190 Centennial Tower 17.05 (SG); VODOVOZOV, Gleb, 039190 Centennial Tower 17.05 (SG)
(74) Representative: Page White Farrer

(57) **Abstract**

Examples of the present disclosure relate to a Wi-Fi sensing module which has a radio module operating under a Wi-Fi protocol and a second radio module operating under a second radio protocol. The second radio protocol is not a Wi-Fi protocol. The module comprises one or more processor configured to execute Wi-Fi sensing software for processing Wi-Fi sensing data, for detecting presence and/or motion in an environment. The processor(s) execute wireless communication software for processing communication data conforming to the second radio protocol, for establishing a communication link with one or more second Wi-Fi sensing module in the environment.

## Description

### Field

The present invention relates to wireless sensing mesh networks, particularly but not exclusively using WiFi sensing .

### Background

Wi-Fi, one of the most commonly used wireless network protocols, is typically associated with wireless internet access and local area networking of devices. The growth in number of Wi-Fi enabled networks around the world to comprise of tens of billions of connected devices has opened up a new range of possibilities for application of Wi-Fi technology other than providing wireless internet access and communication. One promising and tangible application of Wi-Fi signals is that of using it for motion sensing.

Wi-Fi Sensing has been developed over recent years as an alternative way to monitor places. It has various advantages over other sensing solutions. In some forms, it does not need any extra hardware but can rely on existing Wi-Fi routers and Wi-Fi enabled devices in a place. For example, active radar systems require dedicated antennas and transceivers that are complex and costly, while Wi-Fi sensing uses existing devices like cell phones, PCs, and mesh Wi-Fi systems. A user need only to install the required software to transform their setup into a Wi-Fi sensing solution.

Wireless signals, for example Wi-Fi signals, can be used to sense an entity by monitoring changes in signal characteristics. The use of wireless signals in presence detection has the advantage that no cameras need to be used, and therefore the privacy of those being sensed is maintained.

Wi-Fi signals penetrate through walls, enabling out of line-of-sight (LOS) operation, an important consideration for security monitoring applications.

Wi-Fi sensing is innately cost-effective due the near-ubiquitous nature of Wi-Fi. Wi-Fi is widespread, so the infrastructure is already in place. There is no need to build a new ecosystem because the loT (Internet of Things) provides the perfect ecosystem for a sensing system.

Wi-Fi sensing has been found to be surprisingly accurate. Channel State Information (CSI) is collected from the packets and signals used for transmitting and receiving information from regular devices connected via a Wi-Fi network. This technology does not require any additional specialized signals, nor does it degrade network performance or the user experience when using Wi-Fi.

A reliable motion detection system may be built by configuring sensing devices as active transmitter devices to emit 'sounding frames' that 'illuminate' a place that is being monitored by Wi-Fi sensing. The sounding signals may comprise the wireless signals transmitted from the active transmitter devices.

Each sensing device in a Wi-Fi sensing system may therefore be configured to transmit and/or receive wireless signals, and to communicate with other devices in the system, such as other sensing devices, a router and the like; i.e., act as any other loT (Internet of Things) connected device.

To date, Wi-Fi sensing systems have been set up using Wi-Fi instrastructure that may be present in a place - for example for providing broadband capability for user-end devices; i.e., in an loT environment.

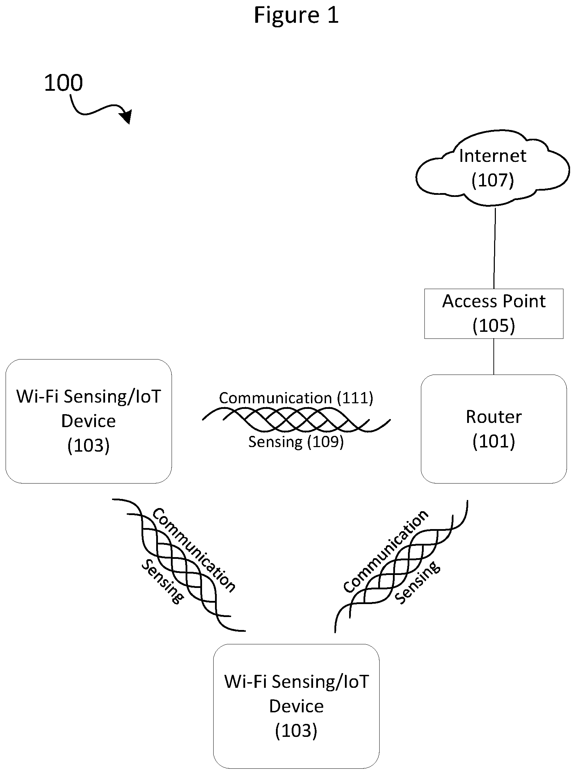

Reference is made to Figure 1, which shows a highly schematic diagram of a Wi-Fi sensing system 100. The Wi-Fi sensing system comprises a router device 101 and two devices 103 which double as Wi-Fi sensing and loT devices.

The router device may itself be configured to provide Wi-Fi sensing and loT functionalities. Devices, e.g., Wi-Fi sensing devices, smart plugs, and other loT devices such as mobile phones, may be connected to an access point via Wi-Fi. The access point may be connected to a router by a wired cable connection, though this connection may also be a Wi-Fi connection. In some examples, wherein fibre, ADSL infrastructure is present, a router may be connected to a modem, or to another router, via ethernet connection. Access points, routers, and modems may be combined as a single unit, or may be provided as separate devices.

The devices 103 and the router 101 provide a Wi-Fi sensing functionality by transmitting and receiving Wi-Fi sensing signals 109 (e.g., sounding frames) between each other. The same devices 101, 103 further cooperate in an loT network via communication signals A11 sent between the three devices. The loT network enables data to be communicated between the devices in the system 100.

### Summary

The present inventors have noted that present Wi-Fi systems rely on an access point or similar to provide communication with a cloud network or internet. The modules in the Wi-Fi system use the Wi-Fi signals to communicate with the access point. This can degrade the performance of the Wi-Fi sensing solution because the Wi-Fi signals are also being used for the communication of data to and from the access point. Wi-Fi throughput of the Wi-Fi network may also be degraded because all devices, whether providing internet connectivity, loT functionality, or Wi-Fi sensing functionality, share the same radio medium. If one or more device on the Wi-Fi frequencies is 'chatty', e.g., transmitting and receiving extensive streams of data on the Wi-Fi frequency band, the devices may need to wait to transmit or receive in order to perform their sensing function.

The inventors have also appreciated that there may be environments where there is no need to communicate with a cloud system or internet in order to implement a satisfactory sensing solution for certain applications. Alternatively, there may be situations where no Wi-Fi network is available at the premises where a Wi-Fi sensing system is to be set up. An exemplary use case may be an office environment in which a Wi-Fi network is highly secure and does not allow loT-connected devices. Another example may include a warehouse where there is no need for a Wi-Fi network. In this context, a WiFi network is a network of WiFi devices or modules that have access to the internet and are used to establish a WiFi communications network for data access, e.g., for browsing, making calls, executing apps and the like. A Wi-Fi sensing system is a system that uses Wi-Fi transmissions to sense events in a place, such as motion or presence.

The present application is directed to problems of improving the performance of Wi-Fi sensing systems. In particular, the present application discloses novel devices and arrangements of said devices which provide an improved Wi-Fi sensing experience for end users, and which may be implemented in remote locations having no existing Wi-Fi network infrastructure.

According to a first aspect of the invention there is provided a Wi-Fi sensing module for use in an environment comprising at least two Wi-Fi sensing modules, the Wi-Fi sensing module comprising:
a first radio communication module configured to operate under a Wi-Fi communication protocol in a first frequency band to transmit and receive Wi-Fi sensing data between the Wi-Fi sensing module and an environment in which the Wi-Fi sensing module is located;
a second radio communication module configured to operate under a second radio communication protocol in a second frequency band to transmit and receive communication data between the Wi-Fi sensing module and the environment, wherein the second radio communication protocol is not a Wi-Fi protocol ; and
one or more processor configured to:
   execute Wi-Fi sensing software for processing Wi-Fi sensing data that conforms to the Wi-Fi communication protocol, for the purpose of detecting presence and/or motion in an environment in which the Wi-Fi sensing module is located; and
   execute wireless communication software for processing communication data that conforms to the second radio communication protocol, for the purpose of establishing a communication link for exchanging communication data with one or more second Wi-Fi sensing module in the environment.

In some embodiments, the one or more processor is configured to execute Wi-Fi sensing software to generate intermediate sensing data. The one or more processor may transmit the intermediate data via the second radio communication module for processing by a central device.

In some embodiments, the first radio communication module comprises the one or more processor.

In some embodiments, the second radio communication module is configured to process communication data that conforms to the second radio communication protocol, for the purpose of configuring a Wi-Fi channel under which the first radio communication module operates.

In some embodiments, the second radio communication module is configured to process communication data that conforms to the second radio communication protocol, for the purpose of configuring a beaconing rate of Wi-Fi sensing data transmitted by the first radio communication module.

In some embodiments, the Wi-Fi sensing module is installed in a plug socket or switch.

In some embodiments, the second protocol is selected from a Thread, Zigbee, LoraWAN, BACnet, Dali, KNX, Sigfox, Cellular, or a Z-wave radio communication protocol, or sub-Ghz proprietary radio protocol (e.g. based on 433 MHz or 868 MHz frequencies).

According to a second aspect of the invention there is provided a Wi-Fi sensing system for detecting presence and/or motion in an environment comprising:
a plurality of Wi-Fi sensing modules, according to any embodiment of the first aspect;
each Wi-Fi sensing device having an established communication link for transmitting and receiving communication data that conforms to the second radio communication protocol with at least one other Wi-Fi sensing module.

In some embodiments of the second aspect, the plurality of Wi-Fi sensing devices are physically located in one of a plurality of zones in the environment. Each zone may comprise at least one Wi-Fi sensing device. In some embodiments, a communication link under the second radio protocol may be established between each Wi-Fi sensing device in each zone. At least one Wi-Fi sensing device in each zone may have an established communication link under the second communication protocol with at least one Wi-Fi sensing device in another zone of the plurality of zones.

In some embodiments, the system comprises a hub device in communication with a service, the service accessible via a network. At least one Wi-Fi sensing device of the plurality may be communicatively coupled with the hub device.

In some examples, at least one Wi-Fi sensing device of the plurality may be communicatively coupled with the hub device via a wired connection operating under an ethernet protocol.

In some embodiments, the at least one Wi-Fi sensing device communicatively coupled with the hub device is communicatively coupled by a radio communication protocol selected from: a Wi-Fi communication protocol, 3G, 4G, 5G, Z-wave, Zigbee, LoraWAN, BACnet, Dali, KNX, Sigfox or a SuBGHz proprietary radio protocol.

In some embodiments, the service comprises a cloud service accessible to the hub device via the internet.

In some embodiments, the system is a local system wherein none of the plurality of Wi-Fi sensing modules is configured for external communications externally of the environment.

In some embodiments, the system further comprises an accessory device. The accessory device may have an established communication link with at least one of the Wi-Fi sensing devices under the second radio protocol. The accessory device may be configured to implement an accessory function responsive to an instruction received at the accessory device as communication data that conforms to the second radio communication protocol.

In some embodiments, the accessory device comprises a security siren configured to emit an alert sound responsive to communication data received under the second radio communication protocol.

In some embodiments, the accessory device comprises a contact sensor.

In some embodiments, the accessory device comprises a vibration sensor.

In some embodiments, the accessory device comprises a humidity, or temperature sensor.

In some embodiments, the accessory device comprises a leak detector, such as a water leak detector.

In some embodiments, the accessory device comprises a thermostat device configured to control a heating system of the environment.

According to a third aspect of the invention there is provided a computer implemented method of configuring a Wi-Fi sensing system for monitoring a place, the system comprising a plurality of Wi-Fi sensing modules in accordance with any embodiment of the first aspect located in the place, the method comprising:
commissioning a Wi-Fi sensing network in the place by:
   transmitting a Wi-Fi signal from a first Wi-Fi sensing module of the plurality;
   detecting disturbed Wi-Fi signals at a second Wi-Fi sensing module of the plurality;
   determining from the disturbed wireless signals a characteristic of a first physical configuration of the Wi-Fi sensing modules;
   providing to a user, via a user interface of a commissioning device associated with the user, feedback based on the characteristic of the first physical configuration;
   detecting that a second physical configuration has been implemented in response to the feedback; and
   determining a characteristic of a second physical configuration; and
commissioning a communication network under the second radio communication protocol between the plurality of Wi-Fi sensing modules in the place by:
   receiving, via a commissioning device, network credentials for a network operating under the second communication protocol;
   establishing a communication link between the commissioning device and each Wi-Fi sensing module of the plurality; and
   sharing the network credentials with each Wi-Fi sensing module.

According to a fourth aspect of the invention there is provided a computer program product comprising computer-readable instructions which, when executed by one or more processors, causes the one or more processor to implement a method according to the third aspect.

### Brief Description of the Drawings

To assist understanding of embodiments of the present disclosure and to show how such embodiments may be put into effect, reference is made, by way of example only, to the accompanying drawings in which:
Figure 1 shows a highly schematic diagram of a known Wi-Fi sensing system made up of devices which also form an loT network;
Figure 2 is a schematic diagram of a presence detection system;
Figure 3 is a schematic diagram of a Wi-Fi sensing network within an indoor environment;
Figures 4a-c schematically illustrate signal variations due to the presence or nonpresence of entities in a room;
Figure 5 is a schematic diagram of a computing system in which embodiments of the sensing system may be implemented;
Figure 6 is an example method for implementing a security event or an environment automation event based on a received signal;
Figure 7 shows a highly schematic diagram of a dual radio Wi-Fi sensing module;
Figure 8 shows a highly schematic diagram of a mesh network comprising dual radio sensing devices;
Figure 9 shows an exemplary mesh network of dual radio sensing devices arranged in two zones and connected to the cloud;
Figure 10 shows the exemplary mesh network of Figure 9, wherein the network is configured with a central device;
Figure 11 shows an exemplary local mesh network of dual radio sensing devices, wherein the mesh network is not connected to the internet;
Figure 12 shows the exemplary local mesh network of Figure 11, wherein the central device is in communication with a partner central unit;
Figure 13 shows an embodiment of the mesh network of Figure 12, in which the central device is further connected to the cloud;
Figure 14 shows a highly schematic diagram of an exemplary network of dual-radio devices transmitting intermediate data to a central device;
Figure 15 shows an exemplary Wi-Fi sensing system comprising first and second zones;
Figure 16 shows an exemplary Wi-Fi sensing system which includes a gateway device;
Figure 17 shows a flowchart that represents an exemplary process for onboarding users to a Wi-Fi sensing system;
Figure 18 is an example method for configuring a Wi-Fi sensing system using signals transmitted between paired devices;
Figure 19 is an example method for configuring a sensing system using an external user device;
Figures 20A-B show an example user interface for configuring a Wi-Fi sensing system;
Figure 21 shows an exemplary Wi-Fi sensing system in communication with a cloud computing environment for configuring the Wi-Fi sensing system;
Figure 22 is a flowchart that illustrates an exemplary Thread network commissioning process;
Figure 23 shows an exemplary user interface flow for commissioning a border router in a Thread network; and
Figure 24 shows an exemplary user interface flow for testing a Wi-Fi sensing network of devices connected under a thread network.

It will be appreciated that where reference numerals of the form xxx-a, xxx-b etc., are used to denote a particular instance of a feature of a drawing, the same reference numeral without a specified letter suffix (e.g., a, b, etc.) may denote a generic instance of the same feature.

### Detailed Description

Wi-Fi sensing is a technology that uses Wi-Fi signals to operate like a short-range passive radar by measuring how the signals interact with movement and the environment. By transmitting signals into the environment, Wi-Fi sensing systems can track motion and presence based on how the signals are reflected and deflected.

Wi-Fi sensing performance is correlated to channel width, i.e., the size of the channel spectrum in MHz. The larger the channel width, the higher the resolution. This is because channel width dictates how much data can be transmitted, and at what speed. Currently, Wi-Fi works in 2.4 GHz, 5 GHz, 6 GHz, and 60GHz bands. Channel width in the 2.4 GHz spectrum is 20 MHz or 40MHz, 5 GHz is 20 MHz , 40 MHz , 80 MHz , or 160 MHz, and 6 GHz band can be up to 80+80 MHz (Wi-Fi 6E). The wavelengths of the Wi-Fi signal in these bands span from 4.2 cm (6 GHz band) to 12.4 cm (2.4 GHz band).

Such signals are well suited for motion detection, activity detection, and recognition of human bodies as well as the breathing rate and even heartbeat detection through DSP (digital signal processing), machine learning algorithms and other processing techniques. Wi-Fi sensing technology enables security, safety, and family care services in smart home and internet of things (IoT) applications. It supports a variety of features and applications such as motion detection, human activity detection and recognition and vital signs detection.

Known Wi-Fi sensing devices comprise a single radio module operating according to a Wi-Fi protocol. The same radio module is responsible for performing Wi-Fi sensing tasks such as emitting sounding frames, and for providing IoT/Wi-Fi network functionalities (i.e., wireless communication links between other sensing devices and/or a router device).

Existing Wi-Fi sensing systems may comprise multiple devices or modules, each device performing sensing operations and communication operations via a single radio module operating according to a single Wi-Fi communication protocol. Therefore, the respective loT and Wi-Fi sensing signals may coexist in the same frequency space, e.g., within a standard range of frequencies associated with the Wi-Fi spectrum. The inventors have noted that such systems can experience deteriorated sensing performance due to noise and interference in Wi-Fi channels. The performance of existing Wi-Fi networks, e.g., for connection to the internet, may also be negatively impacted by the sensing system. This may be due to traffic on Wi-Fi frequencies.

Currently, Wi-Fi works in 2.4 GHz, 5 GHz, 6 GHz, and 60GHz bands. According to known Wi-Fi standards, each 'band' has a given frequency range. These frequency ranges are segmented into multiple 'channels', which are spaced apart but comprise regions of overlap in frequency space. Wi-Fi enabled devices operate within these channels.

For example, the 2.4 GHz Wi-Fi spectrum operates within a frequency range of ~100 MHz, and generally comprises 13 channels of width ~20 MHz.

Depending on a sounding frame transmission rate, the occupied capacity of a Wi-Fi channel due to transmitting sounding frames may vary from around 0.3% capacity at 30 frames per second (FPS) to around 30% capacity at 3000 FPS.

Wi-Fi channel "jamming" may therefore occur when the Wi-Fi sensing system is performing sensing operations, especially those which require a higher sounding frame rate and require more airtime in the Wi-Fi channel. Conversely, the use of Wi-Fi devices for networking may also impact the sensing operation. Usually, an amount of data sent on the Wi-Fi network requires less airtime than is required by Wi-Fi sensing devices. However, this depends on the installation. If there are many active Wi-Fi devices, they may occupy the Wi-Fi channel, and Wi-Fi sensing devices will not be able to send sounding frames at a required rate.

The novel Wi-Fi sensing devices described herein have been developed in view of these problems of interference and noise on Wi-Fi channels which result in deteriorated performance of Wi-Fi sensing systems.

The present disclosure provides a device comprising first and second radio communication modules, the first operating under a Wi-Fi protocol, the second operating under a non-Wi-Fi radio protocol. This enables separation of Wi-Fi sensing functionality with data transfer, network access, and other loT functions. These features are advantageous in that signals transmitted for providing a Wi-Fi sensing function do not compete for airtime with signals transmitted for other data communication purposes, e.g., loT functions, as these functionalities are implemented over a different, non-Wi-Fi radio protocol. The devices described herein may transmit and receive signals for Wi-Fi sensing and data communication purposes, with minimal degradation to either function as a result of interference from signals transmitted to implement the other.

In some topologies where internet connection is enabled, only one Wi-Fi sensing device may need to be connected to an access point (e.g., via a router and/or station device). In some topologies, the system may operate locally if the internet network is unavailable or internet connection is not available.

In comparison to Wi-Fi only topologies, e.g., systems which do not leverage a second, non-Wi-Fi protocol for transmitting communication data between devices, examples of the present disclosure above provide advantages in connection reliability, ease of setup, and in sensing fidelity.

The present description discloses novel device constructions and arrangements of said devices which provide an improved Wi-Fi sensing system. However, before these devices and configurations are described, techniques for implementing a 'mesh' Wi-Fi sensing system are described. Wi-Fi sensing mesh is an exemplary network architecture that may be implemented to provide Wi-Fi sensing functionality. However, whilst examples of the present disclosure relate to a Wi-Fi sensing mesh, it will be appreciated that the devices may implement Wi-Fi sensing systems other than Wi-Fi sensing mesh.

Devices according to the disclosure herein may be provided in a sensing mesh network to provide a Wi-Fi sensing system. Each device may represent a node within the mesh network. To provide a suitable network for Wi-Fi sensing, a mesh network may formed and managed according to the following stages:
1. environment probing
2. mesh formation
3. updating mesh
4. overriding mesh links.

In order to set up mesh devices of the mesh network, the devices may be set into a transmitting or receiving mode, or a mode in which they can both transmit and receive. The transmitting mode is sometimes referred to as a beaconing mode. The receiving mode is sometimes referred to as a listening mode. Each mesh device is set into a beaconing, listening or beaconing and listening mode prior to formation of the mesh. The mesh may comprise particular mesh devices which are capable of running both in beaconing and listening modes at once. Such devices may operate only in one of these modes, but they may operate in both.

### Environment Probing

Environment probing is carried out to understand the connection quality between the devices that will be used as mesh devices in a particular mesh network. In the environment probing procedure, signals emitted by potential peer devices are received and an RSSI (Received Signal Strength Indicator) value is extracted from them. The signals which are emitted in the environment probing phase may be referred to as sounding signals.

An active sounding mode may be implemented. According to this, devices which may form the mesh start emitting sounding frames or packets at a certain rate, and at the same time analyse sounding frames coming from their peers to extract RSSI values from them. The sounding frames may be for example, NDP (null-data-packet) frames. This rate (or frequency) depends on a number of factors including the nature of the devices, the environment etc. Non-limiting examples are 30 FPS (frames per second), FPS 1500/3000 FPS, but other rates are possible for example in the range of 1-2 FPS to 3000 FPS.

In certain embodiments, trends of the RSSI changes may be analysed to understand the dynamics of the quality of the connection between devices. In some embodiments, insights provided by channel state information (CSI data) may also be used to gain an improved understanding of the quality of the connection between devices. In one example, the sounding signals may constitute wireless signals on different sub-carrier frequencies in a communication channel between the devices. In certain embodiments, the dynamics of amplitude change on the different sub-carriers in the channel may be checked. One way of processing this data is to see if the amplitude of the signal varies significantly between frames. As mentioned, these frames could be Wi-Fi frames or frames or packets of other wireless communication technologies. If the amplitude of the signal varies significantly between frames, this may provide an indication that channel is poor, or the transmitter is faulty or in other way inadequate. This would indicate that this particular candidate transmitter device would not be eligible for incorporation in the mesh for the sensing application. This is provided by way of non-limiting example only, there are other ways of utilising RSSI changes and/or CSI data to determine the quality of the connections between devices.

The CSI data may be any form of channel state information, including by way of non-limiting example Channel Impulse Response (CIR) or Channel Frequency Response.

### Mesh forming

The aim is to select transmitting devices within an optimal distance from a listener device. If the distance is too small (the transmitting device is too close to the listener), the sensing area may be too small. If the distance is too large (the transmitting device is too far from the listener device), the sensing quality of the wireless communication network may deteriorate. Certain obstacles may reduce the optimal distance. For example, if there is a concrete wall between the devices, the available sensing distance may be reduced and possibly render that device pair ineligible for the sensing application. This information can be understood by analysing the RSSI information and/or the CSI data.

The RSSI value is used as a proxy to understand how far apart the devices of each pair are. As described further herein, each listening device is seeking to select transmitting devices within an RSSI range which is suitable for the application. The range may be configurable by a user. One example of a suitable range is 45 to 60.

A mesh forming algorithm can implement device selection according to the following steps. In a first step, n devices with RSSI in a particular range (e.g. 45 to 60) are selected using information derived in the environment probing step. N is the maximum number of peers that a particular device can support (due to memory and CPU/processing constraints). That is, each listener device can only accommodate receiving and processing signals from a certain number of transmitting devices.

If the particular listening device which is implementing device selection cannot locate enough peer transmitter devices, an error is reported to the user. If the present listening device which is implementing device selection cannot find at least one transmitting peer with acceptable signal quality, the device is considered not to be operational, and an error is reported to the user.

### Mesh updating

Various scenarios arise where a mesh of intercommunicating mesh devices having been formed needs to be updated.

For example, a new particular mesh device may be added to the place by a user.

In another scenario, a device may be removed from the place. This could be due to breakdown of a device, a Wi-Fi connection issue with the device or simply because a user has decided not to use it anymore. Note that this may particularly occur in the context of household devices which have been implemented as beaconing devices in the mesh.

In another scenario, the wireless sensing environments (e.g. Wi-Fi environment) may be changed. In one example, the Wi-Fi mesh deployed at a home may run an optimisation algorithm and change Wi-Fi channels of various access points (Aps) in the Wi-Fi network.

### Manual Override

The mesh formation algorithm described herein may provide automated determination of transmitter/receiver pairs to be used in a mesh. Note that a transmitter device may have more than one receiver paired with it. That is, a transmitter may be "paired" with two or more receiver devices. An automatic mesh formation using such an algorithm is particularly useful in the establishment of a wireless sensing mesh network. However, scenarios may arise where it is beneficial to provide a user with the facility to override decisions made by the algorithm and to assign sensing pairs manually. For example, this may be accomplished by a client device.

The above and other aspects of the disclosure are described further in the following.

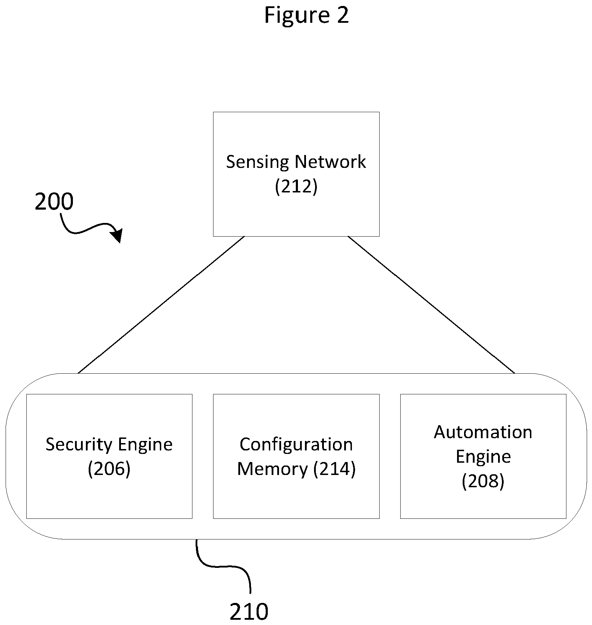

Figure 2 is a schematic diagram of a sensing system 200.

The system comprises a sensing network 212. The sensing network 212 is made up of a set of network devices, or nodes, which communicate with one another. Each node acts as at least one of a transmitter and a receiver device.

Nodes are grouped in sensing modes. There are two sensing modes in the example of Figure 2 - a first (security) sensing mode and a second (automation) sensing mode. A group of devices in the sensing network is configured to be in each of the two sensing modes.

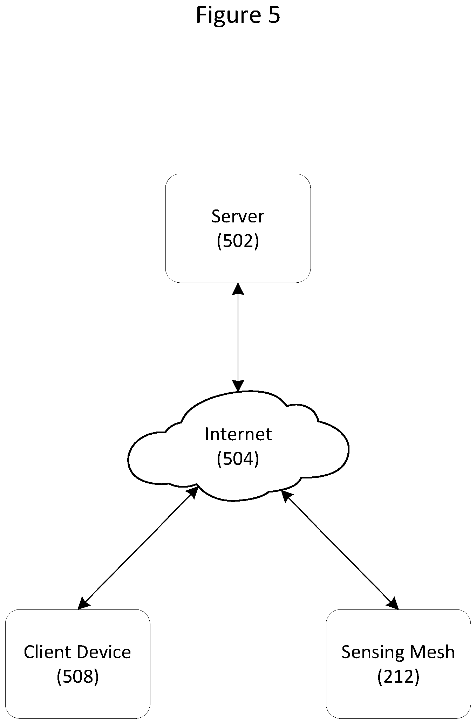

The system also comprises a first sensing mode engine, security engine 206, and a second sensing mode engine, automation engine 208. In some embodiments, these sensing mode engines are implemented on a cloud computing environment 210. The cloud computing environment 210 is described in more detail below with reference to Figure 5. In essence, the cloud computing environment 210 comprises one or more remote servers which communicates with the mesh devices of the mesh network 212 via a network. The cloud computing environment 210 may also communicate, via the network, with a user device in order to provide information to a user of the device relating to the sensed data.

In some embodiments, the sensing mode engines are instead implemented at the receiver device or another processing device in the mesh network. The reliability of the system is improved if processing is implemented at mesh devices as a connection to the server in the cloud is not needed. Furthermore, such an arrangement may be utilized when the environment has no access to the internet or cloud servers.

In some embodiments, each receiver device in the mesh network 212 executes a computer program on hardware which provides the sensing engine the sensing engines. In such an embodiment, the network devices are configured, as set out below, at the cloud computing environment 210, and subsequently run autonomously based on the configuration. In examples where the Wi-Fi sensing system is configured at a place with no internet access, and therefore no access to such a cloud computing environment, network devices may be configured using a mobile application on a mobile device, during a commissioning process in which the sensing mesh devices are configured. The mobile device may establish local wireless communication with the devices via the mobile app to commission the sensing mesh system. This communication link may be a Bluetooth connection between the mobile device and the Wi-Fi sensing device. Other options include creating a Wi-Fi access point on the sensing device and connecting to the device via Wi-Fi for the purpose of commissioning the sensing network.

The mesh devices transmit and/or receive wireless (e.g. Wi-Fi) signals. These provide sensing data. Characteristic data relating to the received signals are sent to be processed via a communication channel. They may be sent to the cloud computing environment 210 when available , or to one of the mesh devices in the environment that executes a processing engine. The characteristic data is determined by a processor of the receiver device receiving the signal.

Once received at the cloud computing environment 210 (or appropriate mesh device), the characteristic data relating to the signals received from devices in the security sensing mode is passed to the security engine 206, while that relating to the signals of the devices in the automation sensing mode is passed to the automation engine 208. The characteristics are analysed at the respective engines to determine whether to trigger security and/or environment automation events respectively, as described below.

The cloud computing environment 210 also comprises a configuration memory 214, which stores associations between transmitter-receiver pairs and sensing modes. The configuration memory 214 is accessed to determine which sensing engine 206, 208 is to be used for analysing the characteristic data.

The sensing system 200 can be configured for different use cases using a configuration tool. The configuration tool may be implemented at the cloud computing environment 210, or in one or more of the mesh devices. The mesh devices of the mesh network 212 can be configured to listen for signals from different transmitter devices based on the use case and/or device layout around the place. Herein, receiver devices are said to "listen to" a particular transmitter device or "listen for" signals from said transmitter device, meaning that the receiver is configured to receive and process signals from that particular transmitter device.

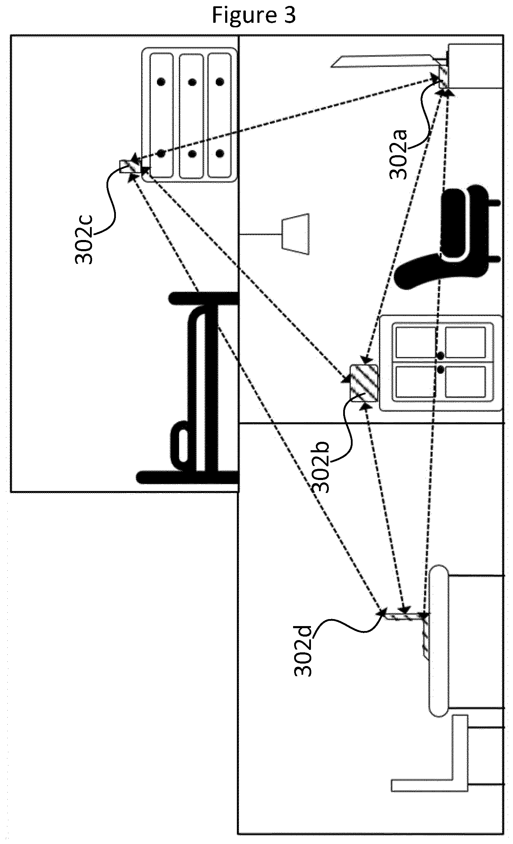

Figure 3 shows a house with three rooms, each room housing at least one network device 302a-d. The house of Figure 3 is an example "place" of the present disclosure, where a place is a region being sensed by the sensing network. There are two network devices 302a, 302b in the living room, and one device 302c, 302d in each of the bedroom and study respectively.

The network shown in Figure 3 has a full network topology, where each device 302a-d is in direct communication with each of the other devices 302a-d. Additionally, each of the devices 302a-d acts as both a transmitter and a receiver, as shown by the bi-directional arrows.

That is, for example, the device 302c in the bedroom receives signals from the two devices 302a, 302b in the living room and the device 302d in the study. It also transmits signals to each of the devices 302a, 302b, 302d. By placing network devices around the house, a mesh network can be configured which transmits signals between devices 302a-d such that the signals can be used to sense most, if not all, of the house.

Although the signals in Figure 3 are shown to be transmitted in a straight line between the transmitter and the receiver, at least part of each signal is reflected off surfaces, including furniture and walls.

### Mesh network Setup

In order to set up the system, as a first step, a mesh network is formed from the devices installed in the place using a mesh forming algorithm. This is carried out by a computer program which is stored on a computer readable media and comprises a configuration tool.

An example system for setting up the sensing system is shown in Figure 5. A server 502 communicates with a client device 508 and the devices which are to form the sensing mesh 212 via a network 504, such as the Internet. The server 502 may be the cloud computing environment 210 shown in Figure 2, or another server remote from the mesh devices. The client device 508 may be a personal computing device such as a laptop or smart phone.

The mesh forming algorithm may be implemented at any of the remote server 502, client device 508, and one or more of the devices of the sensing mesh network 212. The client device 508 may have an application installed thereon for receiving information from the sensing mesh 212 and/or for implementing the mesh forming algorithm. The application may, for example, display sensing information to the user regarding sensed people in the place and/or triggered events. Each of the devices of the sensing network mesh 212 may run a copy of the mesh forming algorithm, such that each device selects which of the other devices to listen to and the sensing mode for each selected device. Alternatively, one of the devices of the sensing mesh network 212 may act as a "hub" device, comprising a processor and memory, for implementing the mesh forming algorithm and/or the sensing mode engines described herein.

The main steps of the mesh forming algorithm are as follows:
1. User pairs all devices in the network. The devices are turned on for this process. The transmitter component and receiver component do not need to be activated for this step, however the devices are connected to the Wi-Fi network and therefore are exchanging information with the network access point. An identifier of each of the devices to be used in the mesh network is stored in the configuration memory 214 (see Figure 2).
2. For each device, n additional devices are selected for that device to listen to, by:
   a. Attempting to select a device in the same room. If there is such a device, this is selected and enabled for the automation sensing mode. If there is no other device in the room, proceed to next step. The algorithm stores an association between the devices and the automation sensing mode in the configuration memory 214.
   b. Selecting *n* - 1 (or *n* if no other devices in the room found at step 2.a) devices from other rooms and enable the security sensing mode. The algorithm stores an association between the devices and the security sensing mode in the configuration memory 214. The devices may be selected based on a received signal strength indicator (RSSI) of a signal transmitted from the device under consideration, and a candidate device to be added as an additional device. To determine this, the device under consideration is configured as a transmitter and each candidate device is configured as a receiver. Alternatively, this could be done without activating the transmitter component. Instead, the normal Wi-Fi communication between the router and the devices can be relied upon. In this embodiment, each device can "sniff" the packets sent from the device to the router and vice-versa and calculate the RSSI value of the received signal with respect to the sender. The RSSI at each candidate device is measured and compared with a range of RSSI values. For example, an ideal RSSI is in the region of -70/-75 for a device located in a different room. Any candidate devices with an RSSI which is too good should be avoided as this means the devices are too close to each other for optimal motion sensing to be effected. For devices in the same room, the RSSI requirements may be different as the devices are closer, for example an RSSI of around -50 may be ideal. One or more factors may be used to determine the RSSI requirements, for example placement of the device, device hardware, presence of/proximity to furniture, distance between devices, wall material, etc.
   c. If no suitable devices can be found (e.g. poor RSSI, only one device turned on, etc.), stopping the mesh forming process and reporting an error to the user via the user interface at the client device 508.

Step 2 of the above method is implemented by the configuration tool implemented in the computer program. That is, the configuration tool selects groups of mesh devices to operate in each of the sensing modes.

The device selected in step 2a above may also be selected in step 2b, such that signals received from said device are used in both the sensing and security modes. In such an instance, n devices could be selected in step 2b.

In some embodiments, the mesh forming algorithm considers the devices being listened to by other devices. For example, if two receiver devices are close to each other, the transmitters to which one of the receivers is configured to listen is based, at least in part, on the transmitters the other device is configured to listen to. The two devices are configured to listen to devices which increase the coverage of the sensing system. For example, one device may be configured to listen to devices which are positioned substantially east of the receivers and the other may be configured to listen to those devices which are substantially west of the two receivers.

Each mesh device may implement the sensing engines. In such an embodiment, the number of devices n to which a particular device listens to may depend on a processing power of the device, such that the amount of data the device is required to process does not exceed the processing resources of the device.

In some embodiments not all Wi-Fi devices in an existing Wi-Fi network are to be used in the sensing mesh. For example, if devices which are already present in the place are to be used as mesh device, only some of the devices in the place may be used. The user selects each 'paired' device to be included in the mesh network via a user interface. This can be done by a user engaging with a user interface at their client device 508, which presents to them a visual indication of each device and its location in the place to be set up.

### Applications of Wi-Fi sensing Networks

As explained previously herein, a Wi-Fi sensing network may be configurable to provide many practical functionalities for end users. For example, temperature control via smart thermostats may be implemented based on detected motion (or lack thereof) in a place. Furthermore, security solutions may be implemented by configuring the system to detect and identify motion that represents a cause for security concern. Devices and systems in accordance with the present disclosure may be configured to provide a motion detection functionality. However, it will be appreciated that other functions such as presence detection may be configurable.

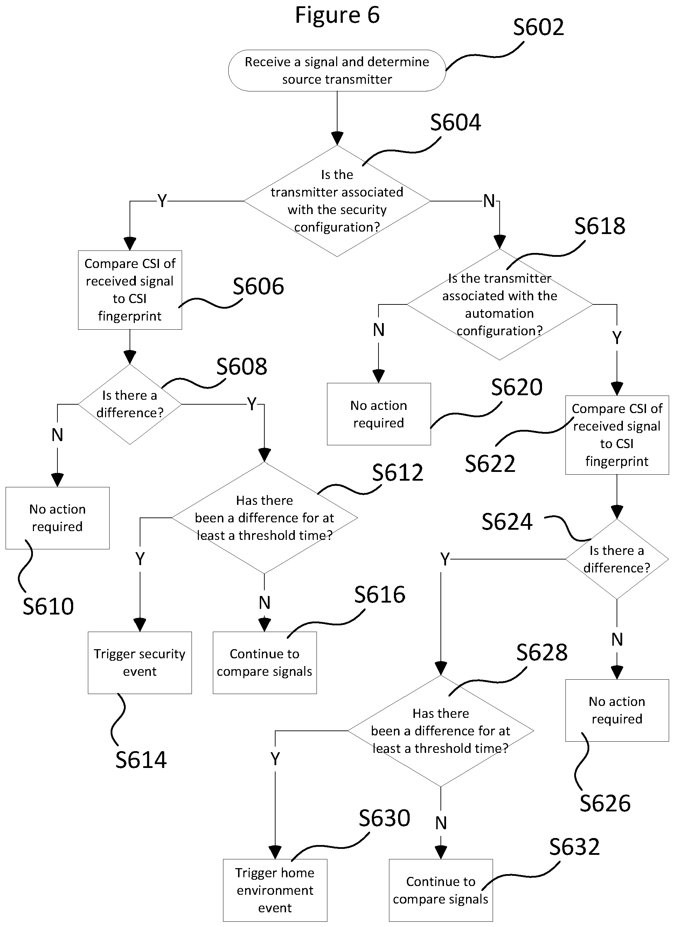

Figure 6 provides an example method for using a Wi-Fi sensing system to trigger security and environment automation events, for example based on detection of motion in a place.

At step S602, a signal is received at the receiver device. At step S604, it is determined by accessing the configuration memory whether the transmitter-receiver pair are in the security sensing mode. The configuration memory may store device identifiers for each transmitter-receiver pair. The signal transmitted from the transmitter device comprises the identifier of the transmitter device. This, along with the identifier of the receiver device, are used to determine the sensing mode.

If the transmitter-receiver pair are in the security sensing mode, the CSI of the received signal is processed and the results of the processing sent to be compared, by the security engine, to the CSI fingerprint of the characteristic signal, step S606, the CSI fingerprint being stored in a computer memory location accessible to the security engine.

Each device may run calculations on CSI data they collect and transmit results of those calculations to other nodes. The calculations performed may vary, though the results may indicate some actionable metric (e.g., motion intensity) derived from the CSI data. In some examples, a CSI fingerprint extraction may be performed. In other examples, devices may look at changes in amplitude of signals over a window of frames, wherein a stable amplitude indicates no motion and a changing amplitude indicates something is moving. In yet other examples, devices may analyze both amplitude and phase of the signal (e.g., using WiDAR), to understand speed of the motion.

One possible way of implementing the comparison uses a Pearson similarity coefficient. Other possibilities are known in the art and may be implemented. If there is no difference between the CSIs, as determined at step S608, no action is required, S610, as there is no intruder disturbing the path of the signal.

However, if it is determined at step S608 that there is a difference between the processed results of the CSI of the received signal and the CSI fingerprint, the time for which there has been a difference is compared to a threshold security time period. This time of difference may be determined based on a number of CSI windows received which indicate a difference.ln the present context, wherein Wi-Fi modules are configured with first and second radio modules, the first implementing a Wi-Fi sensing functionality and the second configured to provide communication functionalities using a second non-Wi-Fi radio protocol, the CSI windows may be configured from the cloud and communicated via a non-Wi-Fi radio protocol such as Thread. Alternatively, data from an internal clock, which may be periodically synchronized with the internet time, of the mesh device corresponding to a time at which the signals were received may be used. CSI windows are CSI values for a defined time period of the received signal. For example, a window may correspond to 100ms, such that the CSI window corresponds to the CSI value for the receive signal for the most recent 100ms. A current window refers to the window of most recently received CSI values. The CSI fingerprint has been derived from one or more past CSI window in which the zone is unoccupied.

If there has been a difference for a time exceeding the threshold security time period, the security event is triggered, S614. If, instead, the time has not exceeded the threshold, the signals continue to be monitored, step S616. The threshold security time period is in the region of 5-10 seconds. By ensuring that there is a minimum period over which there is a difference in the CSI between the current window and the characteristic fingerprint, the number of false positives is reduced while still allowing for the security event to be implemented within a reasonable time frame for security.

Alternatively, sensing techniques may be utilized which do not use a CSI fingerprint. The security engine may instead analyse processed results from the CSI data relating to change and rate of change in amplitude of the received signal, and determine that if the change or rate thereof exceeds a threshold, that the signal is characteristic of motion - i.e., a motion has been detected.

Examples of security events which may be triggered include: generating an alarm sound; transmitting an alert to a security computer system; and transmitting an alert to the client device of the user of the sensing system, altering them to the security breach. In the present context, using Wi-Fi sensing modules comprising first and second radio modules, the triggering of a security event may include transmitting a trigger signal over a wireless communication protocol other than Wi-Fi, e.g., Thread, to a siren or other device configured to generate the alarm sound.

Returning to step S604, if it is instead determined that the transmitter-receiver pair are not in the security sensing mode, it is determined if they are in the automation sensing mode, step S618. If they are not, the transmitter-receiver pair were not meshed during mesh forming and therefore no action is required, S620.

However, if the transmitter-receiver pair are found to be in the automation sensing mode, the CSI of the received signal is compared, by the automation engine, to the CSI fingerprint of the characteristic signal, S622, the CSI fingerprint being stored in a memory location accessible to the automation engine. If there is no difference between the CSIs, as determined at step S624, no action is required, S626, as there is no person disturbing the path of the signal.

If, instead, it is determined at step S624 that there is a difference between the CSI of the received signal and the CSI fingerprint, the time for which there has been a difference is compared to a threshold automation time period. As above, the CSI window may be used to determine the time of difference.

If there has been a difference for a time exceeding the threshold automation time period, a home environment automation event is triggered, step S630. If, instead, the time has not exceeded the threshold, the signals continue to be monitored, step S632.

The threshold automation time period is less than the threshold security time period. This is because automation is time critical. The threshold automation time period is in the region is 100ms to 1 second. By requiring only a short period over which there is a difference in the CSI, automation events may be implemented quickly. A small number of false positives is tolerable with automation, and therefore a relatively short threshold time period is preferable.

Some example environment automation events which may be triggered include: adjusting a light; adjusting a heating unit; adjusting an air conditioning unit; locking/unlocking a door; and adjusting an electrical appliance.

The automation engine may determine a motion statistic indicating an amount of motion captured by the difference between the CSI of the signal and the CSI fingerprint. The home environment automation event is then triggered if the motion statistic exceeds a motion threshold. The motion statistic provides a way to avoid detections, and thus triggering effects, due to movements other than humans. For example, changes in CSI values are larger for humans than for animals. The motion threshold depends on the configuration and location of the devices. For example, the motion threshold may be low if the location of the device is not optimal. Conversely, if there are pets in the place which may trigger automation events, the motion threshold may be higher.

It will be appreciated that the steps of Figure 6 are provided by way of example, and may be performed in parallel or in a different order. For example, steps S604 and S618 may be replaced with a single step of determining the sensing mode.

In the example of Figure 6, the CSI of the received signal is compared to the CSI fingerprint. This method is used to determine the presence of a person or other entity. In other embodiments, the CSI of the received signal is compared to a previous CSI window. That is, at steps S606 and S622, the CSI of the received signal is compared to the CSI of the previous CSI window, or some other recent window. For example, the CSI of the received signal may be compared to the CSI of a signal received within the last 5 seconds. By comparing the CSI to the CSI of a recent by previous signal, motion can be detected. As set out above, movement of the person affects the CSI and therefore changes in the CSI values of recent signals indicates movement. The recent CSI window can also be used for presence detection. In the embodiment using the recent CSI window, the CSI fingerprint need not be determined or stored. Instead, the recent CSI values are stored. CSI values may be stored at the configuration memory 214 and may be stored for a predefined period of time. The CSI values may be stored with an indication of time, for example a time at which the signal from which the CSI is derived was received.

The event to be triggered may be predefined, such that the event is dependent on the transmitter-receiver pair. Alternatively, the event may be based on a determined location of disruption, i.e. the location of the person in the room. In this case, there is an additional step in the method of Figure 6 of determining a location of disruption of the signal, that is the location of the person, and triggering the event based on the determined location. There may be a location-event database which stores events to be triggered in association with the location of a person which triggers the event. The location of disturbance can be determined from the CSI of the received signal. Since the CSI of the signal depend on the signal path, which in turn depends on the location of any objects in the characteristic path, the location of said objects can be determined.

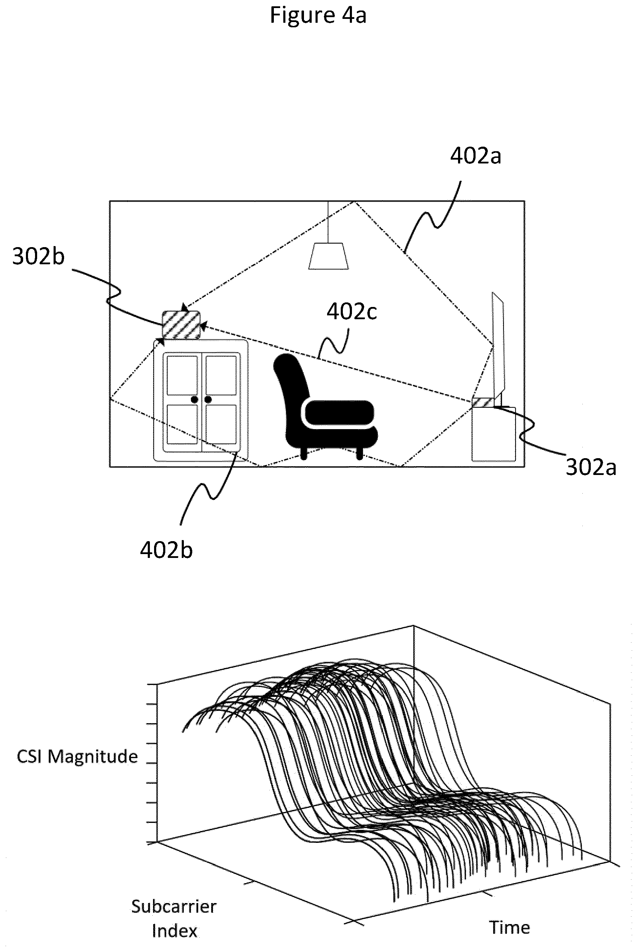

Other practical applications of Wi-Fi sensing are configurable based on the principles of CSI data analysis described above. For example, presence sensing may be implemented, as described below with reference to Figures 4a-c.

As explained previously herein, existing Wi-Fi systems may include a number of devices which are used for operation of the Wi-Fi system. These devices may include devices for setting up and establishing the Wi-Fi signals throughout a place, and devices which may communicate with the Wi-Fi network and which have another function in the place.

Figure 4a shows the living room of Figure 3 in an "undisturbed state", i.e. the room is empty, with nothing moving in the room. Three signal paths 402a-c are shown between the device 302a and the device 302b. The device 302a is here configured as a transmitter device, while the device 302b is configured as a receiver device.

The first signal, following path 402a, is transmitted upwards and slightly right of the device 302a, reflecting off the surface of the TV, and then reflecting off the ceiling, before being received at the receiver device 302b. The second signal, following path 402b, is transmitted downwards and to the left of the transmitter device 302a, reflecting off the floor, followed by the base of the sofa, then by the floor again, followed by the left-hand wall, before being received at the receiver device 302b. The third signal, following path 402c, travels in an uninterrupted straight line from the transmitter device 302a to the receiver device 302b.

When the room is empty, each of these signals is considered a characteristic signal and the signal data a characteristic data representation of the indoor environment. That is, the characteristics of each of the signals received at the receiver device 302b relate to the layout of the room.

Figure 4a also shows a graph of channel state information (CSI) for the signal traversing path 402a which may be used to sense an entity in a room. The graph of Figure 4a shows a CSI magnitude over subcarrier index over time. It will be appreciated that the graph shown is provided for illustration purposes only.

The CSI is determined based on changes in both amplitude, phase, or both of the received signals. The CSI shown is that corresponding to the empty room and is therefore considered the characteristic data representative of the environment. This CSI is otherwise referred to herein as the CSI fingerprint. The signals shown in Figure 4a are characteristic signals as they represent the environment in an undisturbed or reference state. The CSI fingerprint is used for presence sensing.

The areas of the room, or house when communicating with devices 302c and 302d, which are sensed by the signals are referred to herein as signal zones.

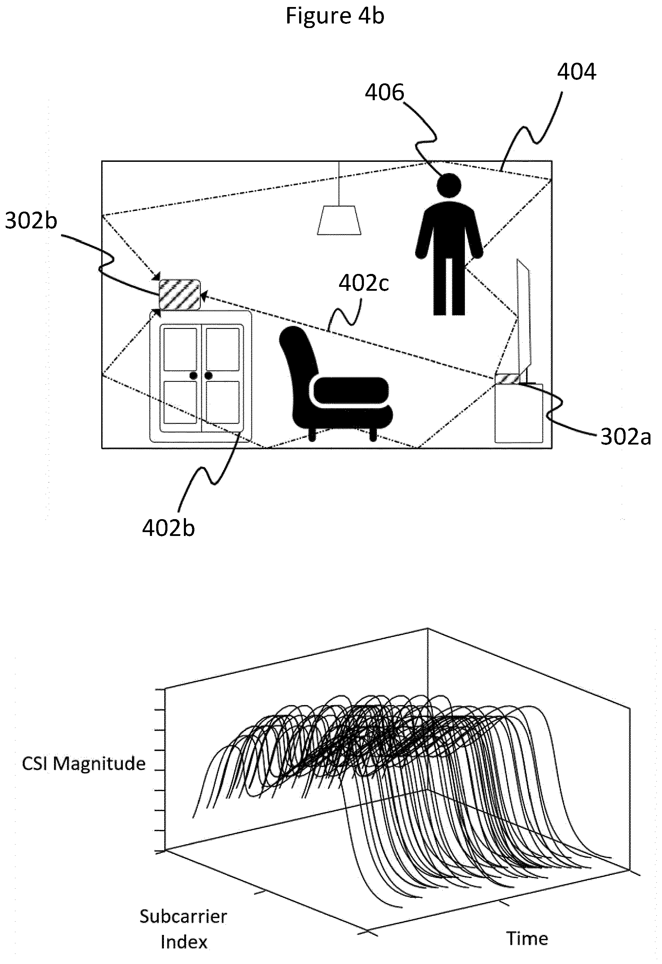

Figure 4b shows the same room with devices 302a and 302b when a person 406 is in the room. It can be seen that the signals traveling along paths 402b and 402c are undisturbed because the person 406 is not in the signal zone of either of these signals. That is, the person 406 is not in the signal paths 402b, 402c.

The signal which, when the room is empty, travels along path 402a has been disturbed. This signal now travels long path 404. This change in signal path results in a change in the characteristics of the signal, as shown by the graph in Figure 4b.

If the person 406 were to move within the room, the signal path would again change, and so also would the characteristics of the received signal. Motion of the person 406 is detected by comparing the characteristics of the most recently received signal to those of the previously received, or another recent but past signal.

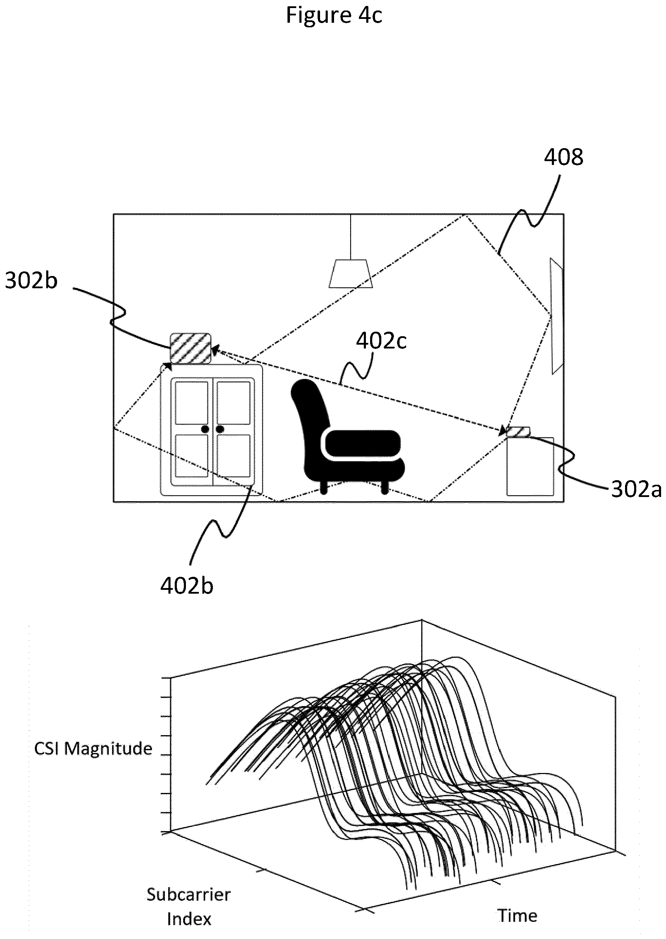

Figure 4c shows another example of a change in the signal path, and therefore signal characteristics. However, in this case, the signal path, and therefore characteristics, are changed due to a change in location of the TV. Since this change is a permanent change in the environment, the characteristic signal needs to be updated so that changes in the signal characteristics caused by a person being present can be determined. The method for updating the characteristic signal is described below.

As set out above, the devices 302a-d can be either transmitter devices, receiver devices, or may act as both transmitters and receivers.

In some systems, the Wi-Fi sensing system may make use of Wi-Fi devices which form part of a Wi-Fi communication network. A Wi-Fi network may comprise an access point/router, one or more extender, one or more gateway and one or more hub. Such devices are known for providing Wi-Fi coverage in a place, and relatively few of these devices may be provided in a mesh network, compared to numbers of other loT or computer devices in the mesh. Furthermore, a place may include Wi-Fi connected devices which also provide another function in the place. For example, computer devices, audio equipment such as speakers, smart devices such as fridges, media systems, communication devices, surveillance systems, climate control systems etc. Examples of computer devices are desktops, laptops, mobile computers, tablets, iPads etc. Equipment related to such computer devices may include input devices (such as mouse/keyboard), memory connection devices such as USB devices and communication devices such as Bluetooth devices. In certain improved systems described herein, the Wi-Fi devices may use the Wi-Fi communication protocol only for WiFi sensing, and not for accessing a router.

Examples of media systems are audio/video systems, television, telephones, audio systems such as high-fi, video systems such as DVD player and communication media system such as satellite and cable systems. Communication devices may include telephones, mobile phones etc. Surveillance system may include motion sensors, control units, video devices (security cameras), etc. Climate control systems may include such components as thermostat, controllers, air conditioner, heater, cooler, fan and appropriate sensors. In certain embodiments, one or more of such devices may be modified to include code for executing the mesh forming algorithm discussed herein. In addition, such devices may include one or more algorithm for processing sensed data in a sensing application to implement that sensing application. That is, devices already existing in a place for carrying out another function can be configured as "sensing mesh devices". While this is advantageous, use of the same Wi-Fi communication protocol for both networking and sensing can cause a deterioration in performance, as discussed earlier.

A Wi-Fi sensing network implemented by the presently disclosed devices may be seen to provide an improved Wi-Fi sensing functionality over known systems. This improvement in Wi-Fi sensing performance arises because the novel sensing devices are configured to perform Wi-Fi sensing operations using a first radio communication protocol (a Wi-Fi protocol), but to provide inter-device communication links (e.g., IoT functionalities and device data exchange) via a second (non-Wi-Fi) radio communication protocol, thereby removing the need for loT and Wi-Fi sensing signals to share airtime in Wi-Fi channels.

The novel Wi-Fi sensing devices of the present invention may be referred to as dual-radio sensing modules, as the devices comprise two distinct radio modules, each configured to operate according to distinct radio protocols which cause no (or significantly reduced) radio interference when operating concurrently in the same place.

### Dual-Radio Module Devices

Aspects of the present invention relate to a novel Wi-Fi sensing device that comprises a first radio module operating according to a Wi-Fi protocol, and a second radio module operating according to a second radio protocol.

Notably, the second radio module operates according to a radio protocol that is not a Wi-Fi protocol.

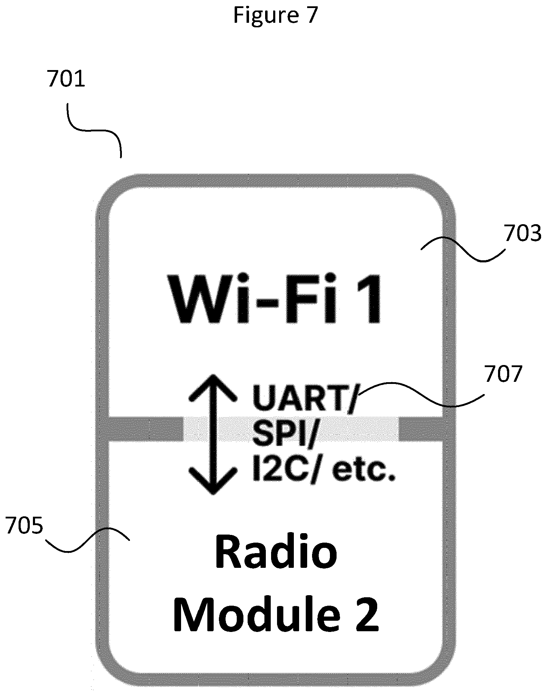

Reference is made to Figure 7, which shows an exemplary Wi-Fi sensing module 701 according to some embodiments of the invention.

The sensing module 701 comprises a first radio module 703 which operates according to a Wi-Fi protocol.

The sensing module 701 further comprises a second radio module 705, which operates according to a non-Wi-Fi radio communication protocol.

The sensing module 701 comprises a wired connection 707 between the first radio module 703 and the second radio module 705.

The first radio module 703 is configured to provide a Wi-Fi sensing functionality. That is, the first radio module 703 is configured to transmit and/or receive Wi-Fi signals, which are processed as described previously herein to detect motion within a place.

The second radio module 705 is configured to provide a wireless communication functionality between the sensing device 701 and one or more other device in a system. The non-Wi-Fi radio communication protocol, according to which the second radio module 705 operates, may be any one of: Thread, Cellular (e.g., 3G, 4G, 5G), Z-Wave, LoraWAN, BACnet, Dali, KNX, Sigfox, or Zigbee, Z-Wave radio protocol or SubGhZ proprietary radio protocol . Those skilled in the art will appreciate that other suitable radio communication protocols than those listed above may exist.

3G, 4G, and 5G are examples of 'cellular' communication protocols. In 3G, 4G, and 5G telecommunications networks, the link to and from end nodes/devices is wireless, and the network is distributed over land areas called cells, each served by at least one fixed-location transceiver (transmitter-receiver). Typically each cell comprises three transceiver stations. 3G, 4G, and 5G are well-known, standard radio communication protocols. Communication under each protocol meets requirements defined in an International Mobile Telecommunications (IMT) standard. 3G requirements are defined in the IMT-2000 standard. 4G requirements are defined in the IMT-Advanced standard. 5G requirements are defined in the IMT-2020 standard.

By way of example, the 'Thread' protocol is listed above as a suitable radio communication protocol for operation of the second radio module 705. Thread is a low-power mesh networking technology for loT devices, built on open standards. Thread was developed with the aim of addressing challenges of interoperability, range, security, energy and reliability, and enables low-power devices with limited processing capabilities to participate in the loT.

The wired connection 707 provided between the first and second radio modules 703, 705 may be configured based on one of the UART/SPI/I²C standards, or any other suitable wired connection standard.

In some examples, both the first and second radio modules 703, 705 may be controlled by a processor located in the first radio module 703. However, other processor arrangements may be implemented.

In other examples, some calculations, e.g., processing operations on data received at a device 701, may be performed by a processor on that device (e.g., located in the first radio module 703). These processing operations may generate intermediate data on the device 701 which may then be transmitted by the second radio module 705 to a central device for further calculations.

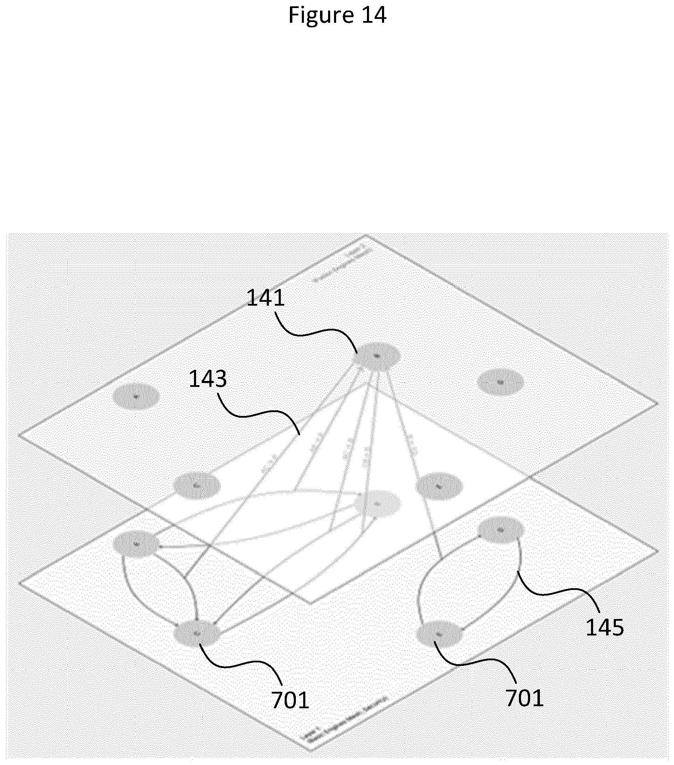

Reference is made to Figure 14, which illustrates the generation of intermediate data described above. A plurality of devices 701 are provided, which may be configured to perform processing operations on radio signals. Each radio device 701 may perform one or more processing operations on radio data by an onboard processor of the device 701 to generate intermediate data 143. The intermediate data 143 may be transmitted via the second radio module 705 of each device 701 to a central device 141, which is configured to perform further calculations and processing operations on the intermediate data 143. The central device 141 may comprise a dual radio Wi-Fi sensing device of the same composition as the other devices 701. The radio devices 701 of Figure 14 may be in communication with one or more other device 701 by radio links 145. Data may be transmitted across radio links 145 by the second radio module 705 of each sensing device 701.

### Dual Radio Device Mesh Structures - Central Device Embodiment (one infrastructure link)

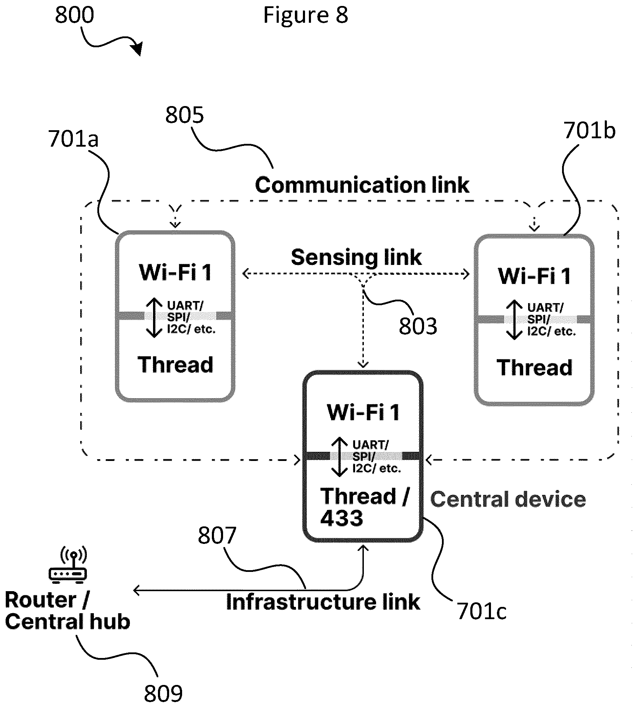

Reference is now made to Figure 8, which shows a highly schematic diagram that illustrates an arrangement of Wi-Fi sensing devices in a Wi-Fi sensing system 800 according to some embodiments of the invention.

The exemplary system 800 comprises three sensing devices 701a-c, each of which comprises a first radio module operating according to a Wi-Fi protocol and a second radio module operating according to a second, non-Wi-Fi radio protocol. In the example of Figure 8, the second non-Wi-Fi protocol is a 'Thread' protocol, though it will be appreciated that other standard radio communication protocols may be used by the second radio module.

The first radio modules of each sensing device 701 in the system 800 form a sensing link 803 between the sensing devices 701a-c. The sensing link 803 may operate by transmission and receipt of sounding frames issued by the sensing devices 701.

The second radio modules of each sensing device 701 in the system 800 form a communication link 805 between the sensing devices 701a-c. The communication link 805 is established according to a non-Wi-Fi radio communication protocol, which may operate within a different radio frequency band compared to signals issued by the first radio modules of the sensing devices 701.

In the exemplary system 800 of Figure 8, one of the sensing devices 701c is selected as a central device.

The central device 701c may be configured to control local operation of the sensing devices 701a, 701b. For example, the central device 701c may control selection/setting of Wi-Fi channels, setting of parameters for generating intermediate data, and, if the Wi-Fi sensing network is a sensing mesh, the central device 701c may control the topology of the Wi-Fi sensing mesh, e.g., selection of which devices are transmitting which are listening, and to whom.

In some embodiments, as shown in Figure 8, the central device 701c may further establish an infrastructure link 807 via Wi-Fi, or 3G, 4G, 5G cellular connection, for example.. The infrastructure link 807 may provide a communicative coupling between the central device 701c and a service external to the system 800. For example, a cloud service may be accessible to the central device 701c when the central device 701c establishes an infrastructure link 807 with a router that is connected to an access point that enables communication between the router 809 and the cloud service.

Such an external service may provide, by way of example, data reporting functionalities, Over-the-Air (OTA) updates which do not require a wired connection to the device, configuration updates and the like, and the central device 701c may decisions for controlling the other sensing devices 701 in the system based on data received from the external service.

In other embodiments, such as is described with reference to Figures D and E, h central device may only control local operation of the other devices 701 in the system. In such an embodiment, all sensing devices 701 may establish an infrastructure link 807 with the router 809.

### Dual Radio Device Topologies | Zonal w/ No Central Device

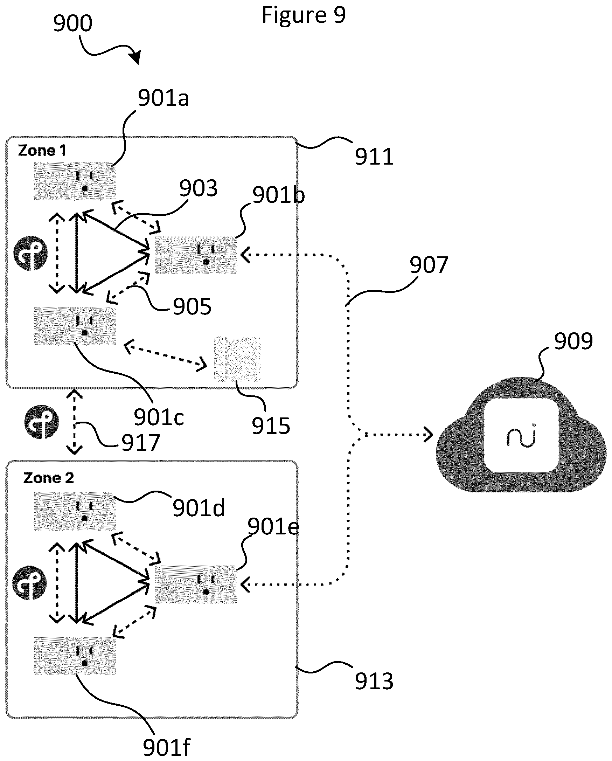

Figure 9 shows an exemplary Wi-Fi sensing system 900 which comprises six Wi-Fi sensing modules/devices 901a-f, located in two distinct zones: Zone 1911, and Zone 2 913. Zone 1911 comprises sensing devices 901a-c, and Zone 2 comprises sensing devices 901d-f.

In the example of Figure 9, the Wi-Fi sensing devices are constituted by Wi-Fi enabled plug sockets. That is, a Wi-Fi sensing device such as those disclosed herein may be retrofitted in an existing plug socket cavity, taking power from wires already located in the cavity and providing Wi-Fi sensing and other wireless capabilities without requiring constant use of the plug socket itself. Nevertheless, it will be appreciated that the sensing devices of Figure 9 have two radio modules, a first that uses a Wi-Fi protocol and a second using a non-Wi-Fi radio protocol, like the sensing device of Figure 9.

Retrofitting of Wi-Fi sensing modules in plug socket and light switch cavities is described in more detail in European Patent Application No. 23154233.3, the contents of which are incorporated herein by reference.

The first radio modules of each sensing device 901 in the system 900 form a sensing link 903 between the sensing devices of the same zone. E.g., links between devices 901a-c in zone 1911 and between devices 901d-f in zone 2 913. The sensing links 903 may operate by transmission and receipt of sounding frames issued by the sensing devices 901.

The second radio modules of each sensing device 901 in the system 900 form a communication link 905 between the sensing devices of the same zone. E.g., between devices 901a-c in zone 1911 and between devices 901d-f in zone 2913. As described previously, the communication links 905 are established according to a non-Wi-Fi radio communication protocol, which may operate within a different radio frequency band compared to signals issued by the first radio modules of the sensing devices 901.

Each zone 911, 913 includes a border router which is connected to an access point that provides internet access and communication with external (e.g., cloud-based) services. Each of the other devices 901 in the system are connected via their respective communication links 905 to the border router devices in their zone. Each device 901 may connect to the border router of the appropriate zone via the communication links 905 to establish a communicative coupling with a cloud service 909, configured to make decisions on behalf of the system, and to provide data reporting functionalities, OTA updates, configuration updates and the like.

It will be understood that the term 'border router' may refer to a hub or gateway to a network such as the internet. That is, devices may transmit and receive data across a network via the border router.

To allow freedom in selecting a channel for Wi-Fi sensing, the border router (e.g., a device connected to a Wi-Fi network for internet access, for example) may not participate in Wi-Fi sensing.

A communication link 917 is also established between the zones 911, 913. This link 917 is established via the second (non-Wi-Fi) radio module of a device 901, which may be the border router. A device 901 in each zone other than the respective border router may establish the link 917.

Generally, a zone may comprise one or more device that is physically located in a portion of a place that is being monitored. For example, a zone may cover a room, a floor of a building, an annexe or garage, or some other distinct location or subset of locations within a broader place that is being monitored. The link 917 may therefore provide a connection between floors of a place.

Notably, the system 900 of Figure 9 does not comprise a central device that makes decisions. The cloud-based service 909 may control devices of the system 900 of Figure 9. The cloud-based service 909 may be communicatively coupled to one or more device 901 in each zone by a communication link 907, which may be a Wi-Fi connectivity link. In other embodiments, the link 907 between the device and the cloud may be a cellular connection (e.g., 3G, 4G, 5G).

Wi-Fi sensing systems such as system 900 may include accessory device, e.g., 915, which may be connected to the border router via a non-Wi-Fi radio communication link 905. The accessory device 915 may be constituted by such devices as smart thermostats, alarm systems such as sirens,contact sensors configured to detect opening of doors, windows and the like, vibration sensors, humidity sensors, leak detectors and the like.

The accessory device may be connected by link 905 to a border router if that accessory requires access to the internet via Wi-Fi. However, if no internet connection is required by the accessory 915, the accessory device 915 may connect via link 905 to either the border router or other device 901 for relaying information within the radio network (e.g., between devices connected by the second radio protocol (e.g., Thread).

### Dual Radio Device Topologies | Zonal w/ Central Device

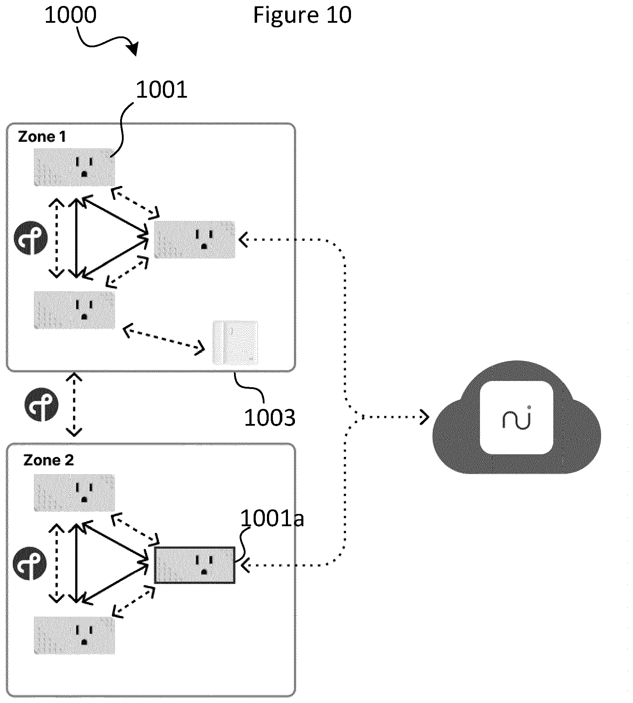

Reference is now made to Figure 10, which shows another exemplary Wi-Fi sensing system 1000 comprising six sensing devices 1001. The arrangement of sensing devices 1001 in network 1000, and the ways in which they are connected (e.g., via communicative and sensing links) may be likened to that of network 900 of Figure 9.

That is, the system comprises two zones, each zone comprising three devices. Each device 1001 in each zone is communicatively coupled to each other device 1001 by i) a sensing link established by a first radio module operating under a Wi-Fi communication protocol, and ii) a communication link established by a second radio module operating under a non-Wi-Fi communication protocol.

Each zone comprises a border router device, in accordance with the description of Figure 9. An accessory device 1003 is also shown to be wirelessly connected to a sensing device 1001 in zone 1 of system 1000, via a communication link established by the device 1001.

System 1000 of Figure 10 differs from system 900 of Figure 9 in that a sensing device 1001a is configured as a central device in system 1000. The central device 1001a may be configured to make system decisions and locally control devices within the system. For example, the central device 1001a may control operation of the accessory device 1003. It will be appreciated that instructions for locally controlling devices of the system 1000 may be issued by the central device 1001a via a communication link, as opposed to a sensing link. That is, system instructions issued by the central device 1001a may be transmitted via radio signals under a non-Wi-Fi protocol.

Zone 2 of system 1000 may be likened to the system 800 of Figure 8.

### Dual Radio Device Topologies | Zonal w/ Central Device - No Cloud Connection

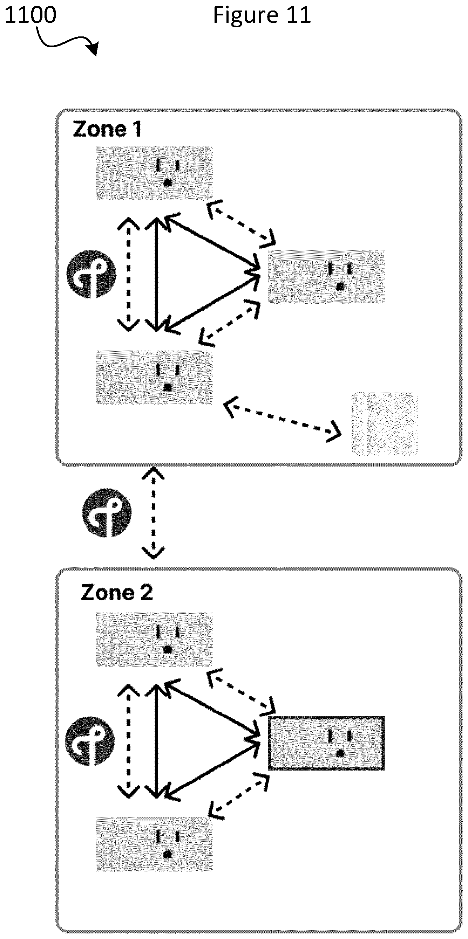

Figure 11 shows a Wi-Fi sensing system 1100 according to some embodiments of the invention. The system of Figure 11 is identical to system 1000 of Figure 10, except that the system is entirely local, and requires no internet Wi-Fi connection (cloud connection). That is, whilst radio communication under Wi-Fi a protocol is enabled between sensing devices in system 1100 (via the sensing links), there is no "Wi-Fi connection" in the colloquial sense; i.e., no provision of a Wi-Fi-based internet connection for user devices that connect to the system.

Wi-Fi sensing systems configured in accordance with Figure 11 may operate without any contact with the 'outside world'. Such a system may provide an entirely localized Wi-Fi sensing functionality within the place being monitored, without the need for Wi-Fi infrastructure such as access points, fibre internet cabling and the like. System decisions are made locally by a central device, which controls operation of the other sensing devices and any accessory devices via communication links established using non-Wi-Fi radio communication protocols.

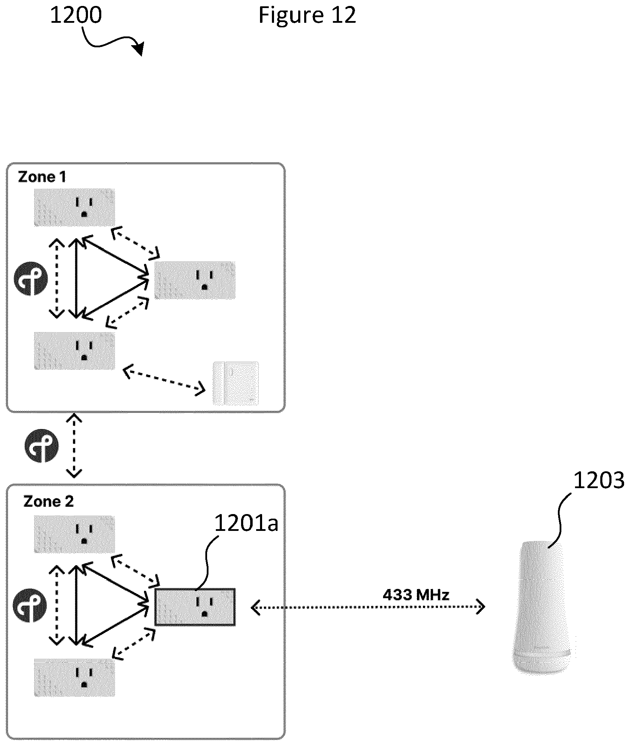

In some embodiments, such as is shown in Figure 12 the same local system may be connected to a partner central unit (PCU), via a non-Wi-Fi radio communication link between the central device and the PCU. In the example system 1200 of Figure 12, a central device 1201a is connected to a PCU 1203 via a communication link established under a 433MHz radio protocol. In the example of Figure 12, communication links between Wi-Fi sensing modules under the second radio communication protocol are Thread communication links..

The PCU 1203 is typically a central hub of a security system that collects data from the devices in the place and makes decisions about whether an alarm should be raised. The PCU 1203 may connect to the cloud by a suitable communication protocol and receive configuration instructions for the security system.

### Dual Radio Device Topologies | Zonal w/ Central Device -Cloud + PCU Connection

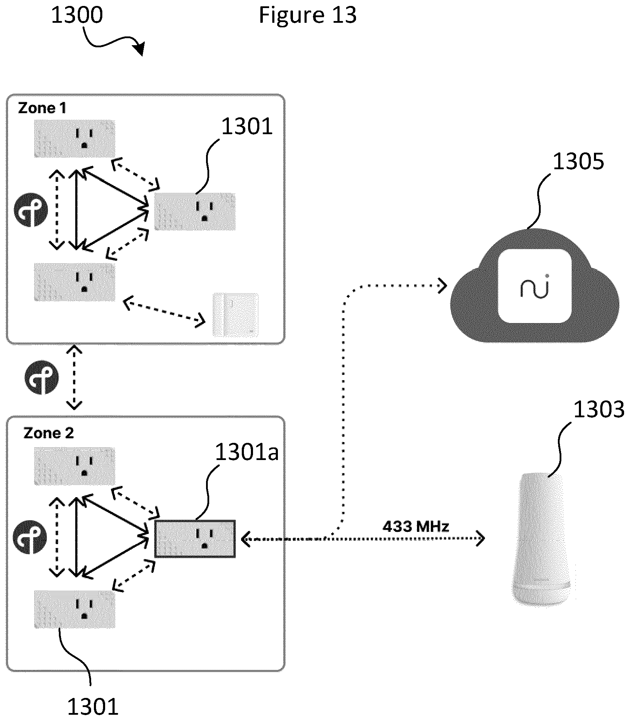

Figure 13 shows an alternate, non-local, embodiment of the system illustrated in Figure 12. That is, Wi-Fi sensing system 1300 comprises a central device 1301a that controls operation of other sensing devices 1301 in the system via communication link established under a non-Wi-Fi radio protocol. The central device 1301a is shown to be connected to a PCU 1303 under a 433MHz radio protocol.

The exemplary system of Figure 13 differs from that of Figure 12 in that the central device is further connected to an external cloud-based service 1305 via a communication link established by the central device 1301a. Connection to the cloud-based service may be a Wi-Fi connection or a cellular connection such as 3G, 4G, 5G, etc., and may be used for the same purposes as described with reference to Figures 9 and 10, namely data reporting, OTA updates, configuration updates, etc. Alternatively, a Z-wave, Zigbee, LoraWAN, BACnet, Dali, or Sigfox wireless protocol may be used for connection between the central device 1301a and a hub device to which the service 1305 is accessible. In other examples, a wired ethernet connection may be provided.

It will be appreciated that references herein to a connection or coupling with a cloud-based service or other external service may refer to general internet access, e.g., wireless connection to a router or other device that is in turn connected to an internet access point.

### Zone Structure

In the Wi-Fi sensing system embodiments illustrated in Figures 9-13, the devices are separated into zones. More generally, zones may be defined spatially. For example, a zone may be established for each room that is to be monitored in a building.

A zone may comprise two or more sensing devices, such as the retrofitted plug socket devices shown in Figures 9-13.

If a zone comprises more than three sensing devices, the zone is further segmented into 'sub-meshes' of two or three devices. For example, a zone comprising four sensing devices may be segmented into two sub-meshes, each comprising two sensing devices. Similarly, in a second example, a zone comprising seven sensing devices may be segmented into three sub-meshes: one comprising three devices, and the other two sub-meshes comprising two sensing devices.

When a zone comprises multiple sub-meshes as described above, a border router may be configured for each sub-mesh. Alternatively, a border router may be configured for each zone. In another example, a single border router may alternatively be configured for a place, where the place may comprise one or more zone, each zone comprising one or more sub-mesh.

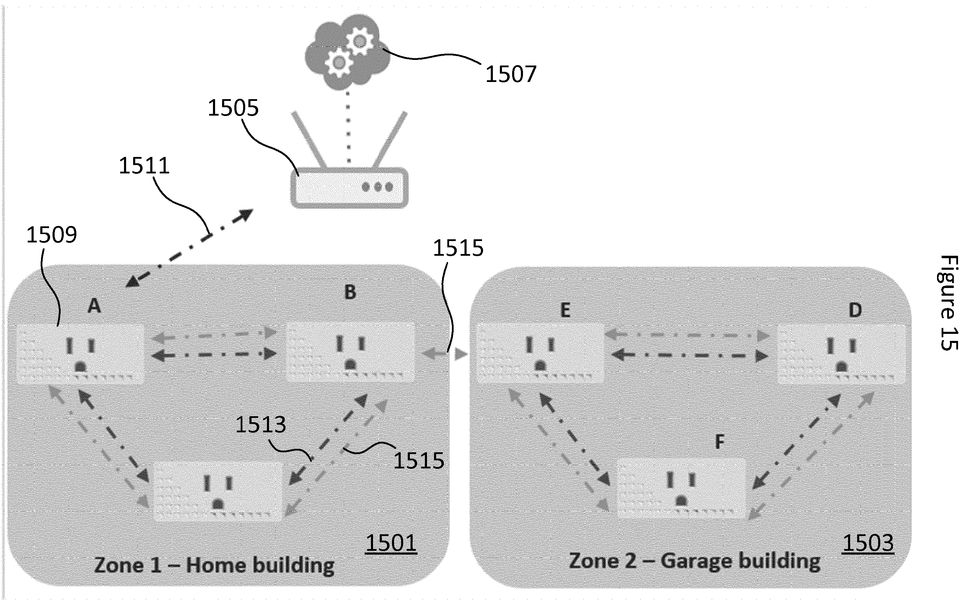

In some examples, such as shown in Figure 15, a place being monitored may comprise regions where Wi-Fi sensing and communication functionalities are complemented by internet access (e.g., via a Wi-Fi network), **and** regions in the same place that do not have such Wi-Fi access. That is, devices in a first zone 1501 of a place may be within range to established a Wi-Fi connection to an access point router 1505 for accessing the internet or a cloud service etc.. However, one or more device in a second zone 1503 in the same place may be remote from the access point router 1505 of the Wi-Fi network, such that no Wi-Fi connection (e.g., for internet access) is available in the second zone 1503. However, one or more device that is too remote to establish a Wi-Fi connection may still perform Wi-Fi sensing tasks within the sensing mesh (or other Wi-Fi sensing configuration). This is possible for several reasons. Firstly, the Wi-Fi sensing function does not require Wi-Fi connectivity in a networking context, it is the nature of Wi-Fi radio signals that provides suitability for Wi-Fi sensing. Then, due to the connectivity layers (links) being provided as communication links under the second, non-Wi-Fi, communication protocol, there is still no requirement for Wi-Fi network connection to enable communication between Wi-Fi sensing devices.

As illustrated in Figure 15, such a situation may arise where the first zone 1501 is configured for monitoring a home building, and the second zone 1503 is configured for monitoring a garage building or location remove from the access point router 1505. It will be appreciated that other arrangements of zones in which this situation arises exist.

In Figure 15, each zone 1501, 1503 comprises a plurality of Wi-Fi sensing devices, each having two communication links with each other device as represented by two-way dashed arrows. In accordance with examples described previously herein, one of the arrow links 1513 represents a Wi-Fi sensing link, and a second arrow link 1515 represents a communication link under a second non-Wi-Fi radio protocol.

In the example of Figure 15, a first device 1509 (also labelled A) in the first zone 1501 is configured as a border router for the system and may act as a virtual central unit. The border router may establish a Wi-Fi communication link 1511 with the access point router 1505 to provide a Wi-Fi network. A cloud-based service 1507 to which the border router is connected via the access point router 1505 may also control some or all operation of the overall system.

The second zone 1503 comprises three Wi-Fi sensing devices, labelled D, E, F. As in the first zone 1501, each device in the second zone 1503 includes a Wi-Fi sensing link 1513 and non-Wi-Fi radio communication link 1515 with each other device in the second zone 1503. The second zone 1503 is in communication with devices of the first zone 1501 via a communication link 1515 between the zones 1501, 1503, the link established under the second non-Wi-Fi radio communication protocol.

One or more device in the second zone 1503 may be sufficiently far from the access point router 1505 that no Wi-Fi connection could be established therebetween. However, in place of Wi-Fi connection to all devices, the border router 1509 (device A) in the first zone 1501 establishes the Wi-Fi link with the access point router 1505. The communication links under the second radio protocol enable communication for setup, updates, transmission of data for processing or transmission of intermediate data for further processing, etc. (via links 1515), still without requiring Wi-Fi network connection. The second radio communication protocol may also be used for diagnostic messages about network performance, or for communicating messages based on instructions from a commissioning device (see description below). Such messages may be communicated from the commissioning device, via the border router 1509 to the devices 1501 for accessing local data on the devices. This enables those remote devices still to participate in Wi-Fi sensing and communicate between devices in the zone, and ultimately with the access point router 1505 and/or cloud service 1507.

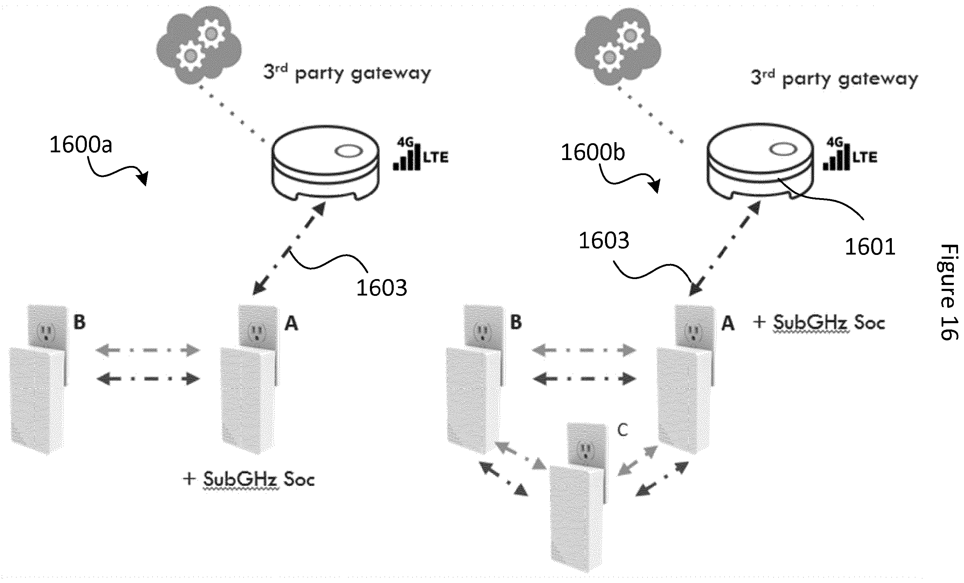

Reference is now made to Figure 16, which illustrates an exemplary gateway device topology. Figure 16 shows a first Wi-Fi sensing system 1600a and a second Wi-Fi sensing system 1600b.

The first Wi-Fi sensing system 1600a comprises two Wi-Fi sensing devices, which are dual radio module devices as described previously herein. As described previously, the devices perform Wi-Fi sensing by transmitting and receiving Wi-Fi signals, and transmit communication data to each other via a non-Wi-Fi radio protocol.

The second system 1600a show an example comprising three Wi-Fi sensing devices, each configured for transmitting and/or receiving Wi-Fi signals for Wi-Fi sensing, and for communicating with the other Wi-Fi sensing devices via a non-Wi-Fi radio protocol.

The first and second systems 1600a, 1600b each comprise a gateway device 1601, which may provide internet or network access (e.g., to a cloud service) via a cellular protocol (e.g., 3G, 4G, 5G and the like).

In each system 1600a, 1600b, a Wi-Fi sensing device is selected as a border router and is configured for communication via a third radio protocol (e.g., a subGHz radio protocol) to the gateway device 1601. That is, the border router may establish a communication link 1603 with the gateway device 1601 under a third radio communication protocol distinct from the Wi-Fi protocol and the second communication protocol. The border router may embed a subGHz chipset on top of modules configured for communication via Wi-Fi, Thread (or some other second non-Wi-Fi radio protocol), and/or Bluetooth.

The topology illustrated in Figure 16 does not require an access point for a Wi-Fi network because network access, access to the internet, and/or access to a cloud service is provided to the Wi-Fi sensing devices via the gateway device 1601 over the communication link 1603 established under the third radio communication protocol.

In examples such as in Figure 16, over-the-air (OTA) updates may be performed via a bButooth connection if bandwidth under the third radio communication protocol (e.g., a subGHz protocol) does not allow updates to the system 1600a, 1600b.

As described previously herein, one or more Wi-Fi sensing module in a system may be position out of range of a Wi-Fi access point. Further, in some examples, a border router may be required in a place that has no smart-home hub in that place, i.e., no Wi-Fi network at all. The description that follows relates to commissioning and setup of dual radio devices in Wi-Fi sensing systems according to the above examples. The example below exemplifies the commissioning process using Thread as the second radio communication protocol. However, it will be appreciated that systems using other candidate protocols for use as the second non-Wi-Fi radio protocol may be commissioned via a similar process .

A computing device, e.g., a mobile device such as a smartphone, tablet device, laptop, and the like may be used for commissioning and setup of dual radio devices in a Wi-Fi sensing system. The devices may be commissioned via data transmitted and received over the second radio communication protocol described above. Operating systems of the mobile device may be pre-equipped with API software for managing and sharing thread credentials, I.e., network properties such as Thread Operational Dataset.

A new Thread network may be created in a given place regardless of any preexisting network.

Thread network credentials may be generated by a commissioning device, e.g., the mobile computing device. By scanning for other available networks, it may be ensured that the Personal Area Netork (PAN) ID of the new Thread network is unique among other networks that are accessible in the place. A least occupied channel of the Thread protocol may be selected. Thread network credentials, once created, may be stored locally on the computing device. The network credentials may not be synchronized across user accounts through the cloud, and therefore the same mobile computing device may be used to commission all devices in the thread network.

The description below details the commissioning process in examples where a Wi-Fi access point is available within the environment.

One or more device in a place to be monitored may be commissioned as a border router to interconnect the Thread and Wi-Fi networks. That is, the border router may connect via Wi-Fi to an access point router for transmitting and receiving data over a Wi-Fi network. However, the border router also participates in the Thread network with other Wi-Fi sensing modules. Border routers require a strong reliable Wi-Fi connection to an access point router. Border router devices may or may not form part of the Wi-Fi sensing network.

Where an environment comprises multiple zones, a single border router may be commissioned in each zone. Only one border router may be commissioned because of the requirement for good Wi-Fi connection, and the difficulty in placing multiple devices nearby a Wi-Fi access point. If zones in a system form disjointed groups of interconnected devices due to their remoteness, they remain connected to the Wi-Fi network. That is, a Thread network is an isolated network comprising Thread devices. However, if a Thread device would like to access data outside of the Thread network (e.g., connect to the cloud), that device needs to send data packets outside of the Thread network. This may be achieved by sending the packet to a border router, which may forward the packet to the external resource or service (e.g., the cloud). When an external resource sends a reply, the border router forwards a reply data packet to the Thread device.

A system may stop working if all border routers are disconnected. However, if a border router in a single zone is deleted, no particular action may be taken. A new device may be commissioned to bring a new border router. However, if a border router of a zone is inoperative (e.g., powered off) but not deleted, a new border router need not be commissioned. In principle, a Thread device may be reconfigured from border router to non-border router. There is also an internal Thread Network organization which may automatically change an end device (non-border router) to a router and back. However, a router cannot be promoted to a border router.

Devices state if they are border routers. This way, a commissioner (e.g., a human user operating a commissioning device to set up a Thread network) may determine whether to commission a next device as a border router or not, based on whether a zone already includes a border router. Therefore, there is no need for the commissioner to connect to the Wi-Fi network and perform a border router discovery process. Non-border routers may be connected to by the commissioning device, e.g., by Bluetooth. The Thread operational dataset (i.e., network properties) may be sent directly to the device. Another option includes asking the border router to commission a non-border router that is available for commissioning.

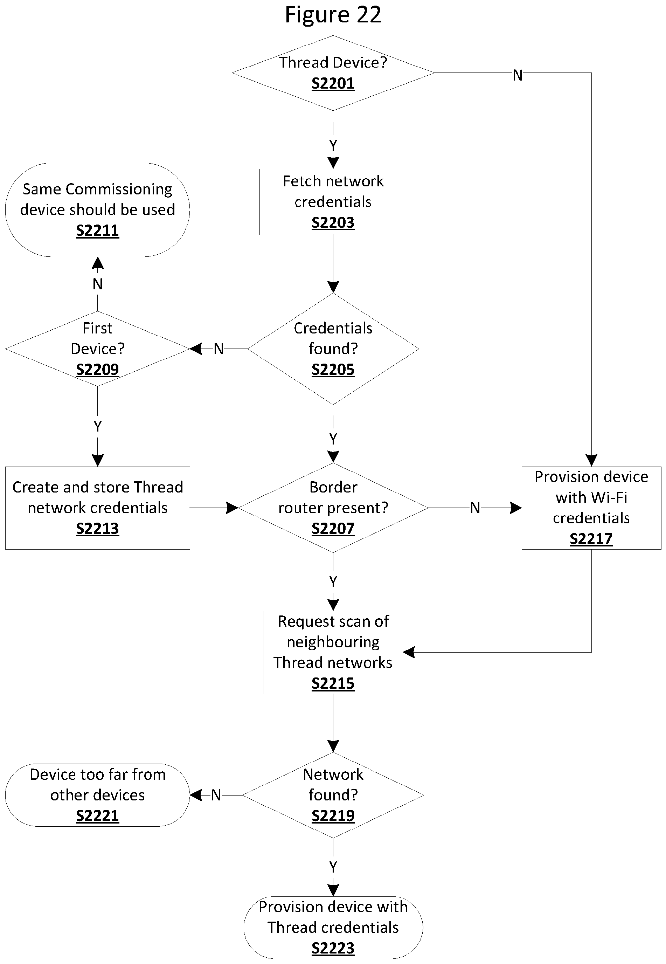

Reference is made to Figure 22, which illustrates an exemplary Thread network commissioning flow, in a place where a Wi-Fi network is also present. At a first step S2201 it is determined whether a thread device is present at a place at which the network is being commissioned.

If there is already a thread device, the flow progresses to a step S2203, at which network credentials for the Thread network are fetched from local storage of the commissioning device. If there is no Thread device, the flow progresses to a step S2217 which is described later.

After fetching the network credentials from local storage at step S2203, an assessment is made as to whether the credentials have been found, at step S2205. If no credentials are found, the flow progresses to S2209, wherein a question is raised as to whether the Thread device being commissioned is a first Thread device in the network.

If the Thread device is determined **not** to be a first device in the network, the flow terminates at a step S2211 because the commissioning device being used cannot be a same commissioning device as used previously during setup. If the Thread device is a first device in the network, the flow progresses to a step S2213, wherein Thread network credentials are created and stored locally on the commissioning device.

Following step S2213, the flow progresses to a step S2207, wherein a question is raised as to whether a border router is present in the Thread network. Note that if existing network credentials are successfully retrieved from local storage of the commissioning device at step S2205, the flow then also progresses to step S2207.

If a border router is not present, the flow progresses to a step S2217, wherein the device is provisioned with Wi-Fi credentials, thereby commissioning a border router. The same step S2217 is taken if at step S2201 it is determined that no thread device is present. That is, a first device in the Thread network is commissioned as a border router. Following step S2217, the flow progresses to a step S2215, wherein a scan of neighboring Thread networks is requested. The same step is taken if at step S2207 it is determined that a border router is present.

Following step S2215, an assessment is made at step S2219 as to whether a Thread network has been found. If no Thread network can be found, the flow terminates at a step S2221 because the device presently being commissioned is, in this case, too far from other devices to find the Thread network and connect to it.

If at step S2219 it is determined that a Thread network is found, the flow terminates at step S2223 by provisioning the device with the Thread network credentials, allowing the device to join the network. The flow of steps S2201-S2223 may be repeated to connect additional devices in the Thread network.

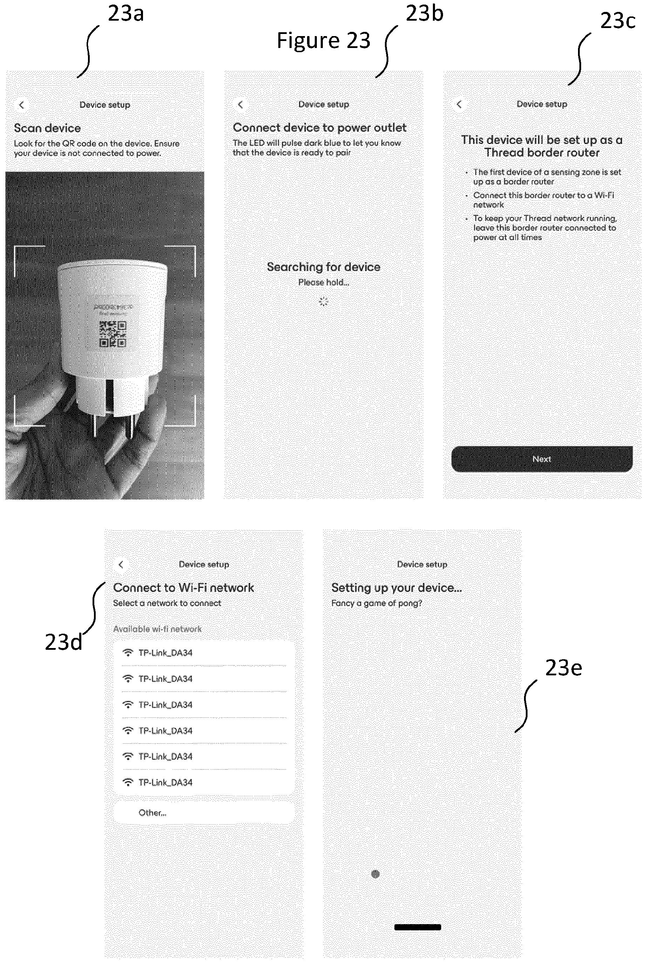

Figure 23 shows an exemplary user interface (Ul) flow which may be rendered on a display of a commissioning device to setup a border router in a Thread network. The exemplary UI flow of Figure 23 may guide a user through the commissioning flow illustrated in Figure 22. A first UI 23a shows a user operating a camera of a commissioning device, the camera being used to scan a OR code identifier associated with a Wi-Fi sensing device. The Wi-Fi sensing device may be a Wi-Fi sensing module configured in accordance with examples provided herein.

In a second UI 23b, instructions are provided indicating that the device scanned at UI 23a should be connected to power. An indication that the device is being searched for is displayed. Once the device is connected to power and is findable, UI 23c may be displayed.

UI 23c shows a device setup screen indicating that the device will be set up as a Thread border router.

UI 23d shows a Wi-Fi setup screen through which an existing Wi-Fi network may be selected. On selection of a particular network, the associated Wi-Fi credentials may be sent to the device to enable it to connect to the Wi-Fi network.

UI 23e shows a setup loading screen, which may be displayed as the device is connected to Wi-Fi.

Once a border router is set up, other devices may be connected to the Thread network. UI 23a and 23b may also be presented when connecting non-border router devices in the Thread network. However, the device setup screen (corresponding to UI 23c) may instead indicate that the device will join the existing Thread network.

The same commissioning device may need to be used because that device holds the network credentials. There may be no need to connect the additional devices to the Wi-Fi network, and therefore an equivalent to UI 23d may not be provided when non-border router devices are connected to the Thread network.

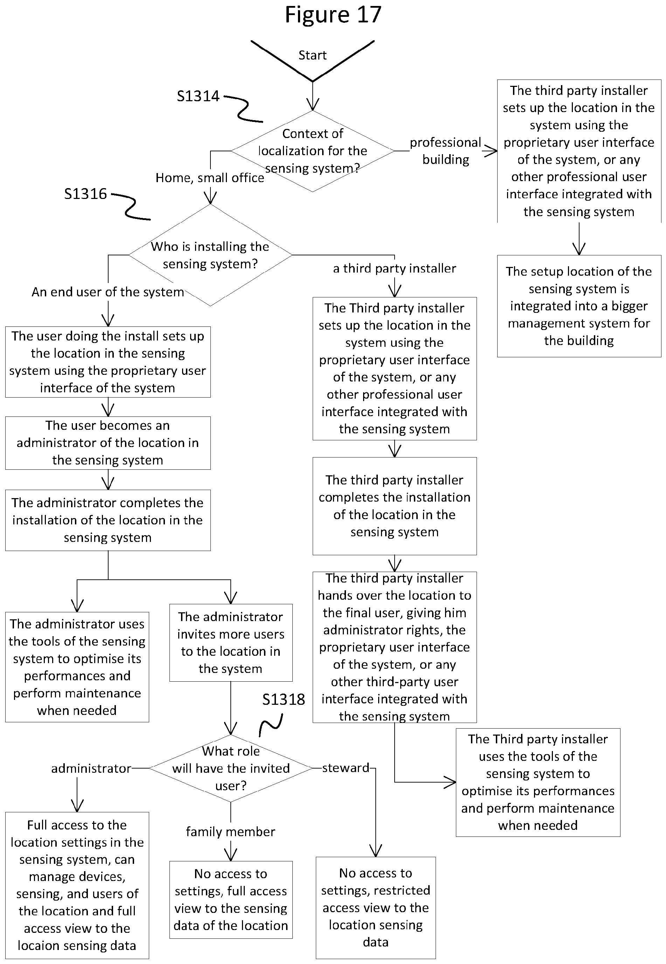

The description above relates to technical aspects of commissioning devices in a Thread network for providing a Wi-Fi sensing system. Reference is now made to Figure 17, which shows a flowchart directed to a user-side onboarding process for the Wi-Fi sensing aspect of the system. Figure 17 illustrates and exemplary process by which users of varying types (e.g., administrator, third party commissioner etc.) may set up a Wi-Fi sensing network in accordance with the examples described herein.

Users of a Wi-Fi sensing system may be categorised into: "administrators" or "curators", who are able to alter the system; "family and close friends", who have access to data regarding the system but are not able to alter the system; and "stewards", who interact with the system in the sense that they are sensed by the system but have no access to any data generated by the system. The administrator role may be explained as in Figure 17. Each user of the sensing system may have a defined role for each location, which may be described as in Figure 17. In Figure 17, step S1314 is a step of determining the localization context of the system, selected between professional and domestic. Other localisation contexts are possible - the system could be implemented in a variety of contexts, including offices, factories, warehouses etc. Step S1316 is step of determining who is installing the sensing system between an end user and a third party installer. The installation flows may differ depending on the type of installer. Step S1318 is a step of determing what role a user has, between administrator, steward and family member. Other roles may be provided in the system. The user may be invited into the system as shown in Figure 17. The descriptive text in the boxes of Figure 17 are hereby incorporated into the present description as part of the description of the present disclosure. The order of the steps may be as illustrated in Figure 17 or in any suitable order. Data defining the localisation context, installation context and/or role may be stored in suitable data structures in computer memory provided by the client (e.g., commissioning) or server (e.g., cloud) device. The roles may be stored in association with an identifier of the person in that role.

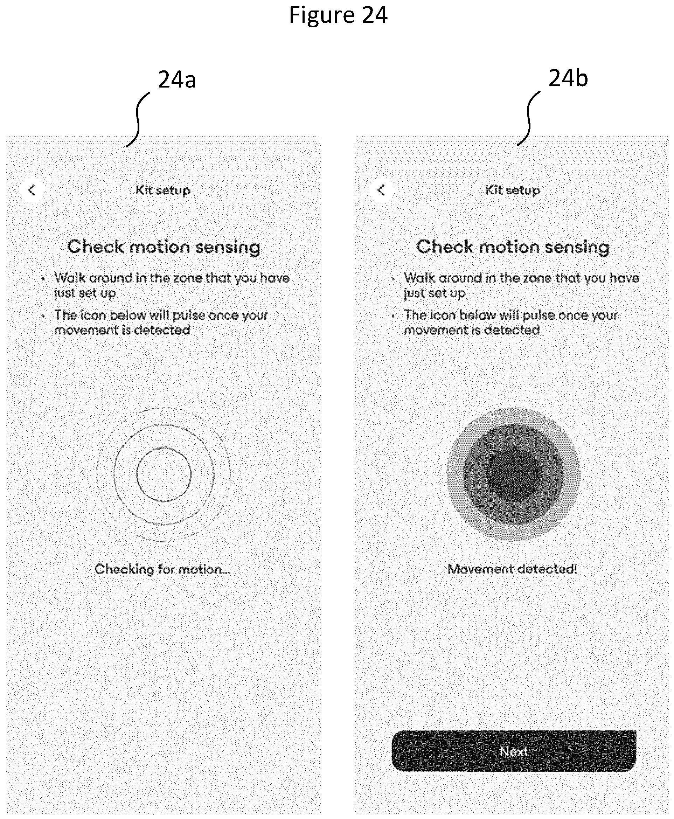

Figure 24 shows a UI flow that may be displayed on a commissioning device to assess whether a motion sensing capability of a plurality of Wi-Fi sensing devices in a Wi-Fi sensing system is functioning correctly. A first UI 24a shows an instruction screen indicating that a user operating the commissioning device should walk around the zone being monitored. A second UI 24b shows a pulsing UI element that indicates movement has been detected in response to the user moving around the zone. It will be appreciated that the UI flow of Figure 24 may be presented on a commissioning device following setup of a thread network between the devices, and after commissioning the Wi-Fi sensing devices to transmit and receive Wi-Fi sensing signals.

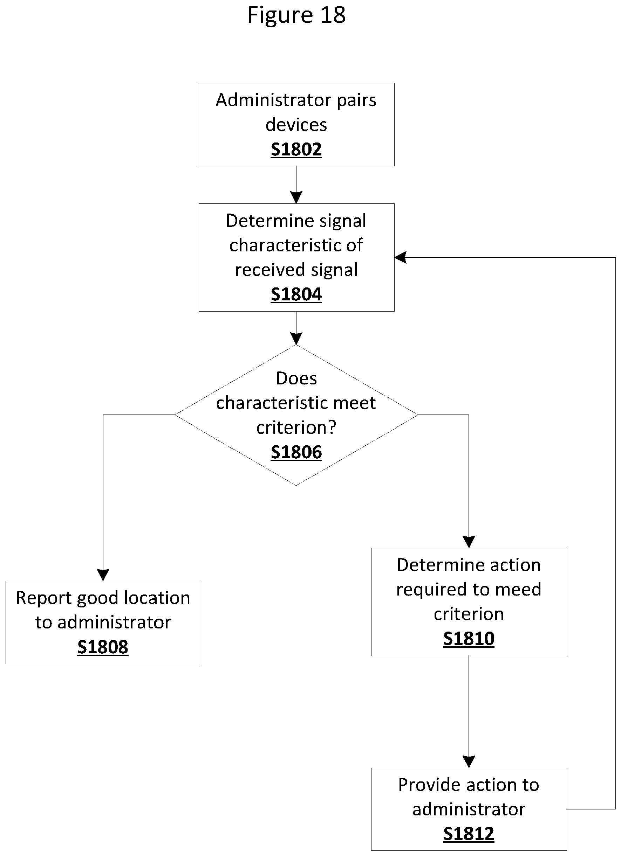

Figure 18 shows an example method for configuring the Wi-Fi sensing system, which uses signals received at the devices/modules. The example of Figure 18 relates to configuring a Wi-Fi system in a place in which a Wi-Fi network is accessible. However, as long as a cellular network access point (e.g., 4G dongle or SIMCard router), or Ethernet access is configured at the border router, the example method of Figure 18 may still apply without a Wi-Fi access point.

At step S1802, an installer/administrator pairs Wi-Fi sensing modules/devices. The paring of devices may comprises joining the devices to a Wi-Fi network. The devices are placed in a first physical configuration. The physical configuration comprises the location, rotation, and/or Wi-Fi channel of the devices. More details about the different kind of installations of the sensing system may be found in Figure 17 and in the above description. Once the sensing system is configured, a different user interface might be used by the enduser, depending on the context of the installation. A handover from the installer to a third party interface may be required.

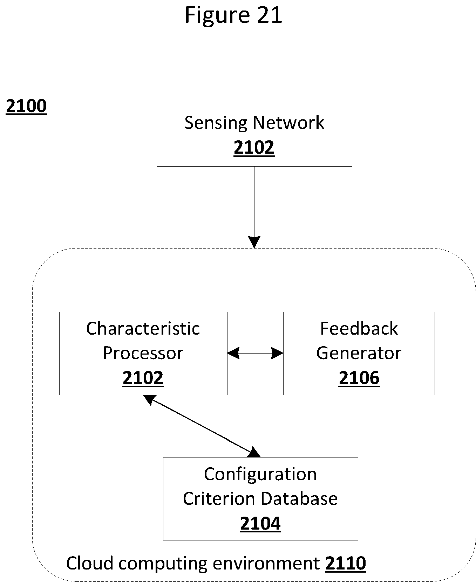

A signal is received at a device from another device and the characteristics determined in step S1804. The characteristics of this signal may be sent to a characteristic processor 2102 of a cloud computing environment 2110, which determines whether the characteristic meets the configuration criterion stored in the configuration criterion database 2104 at step S1806. Reference is made to Figure 21, which shows the cloud computing environment 2110 in communication with the Wi-Fi sensing network 2102.

If it is determined that the criterion is met, the devices in communication are in the preferred locations for sensing. The characteristic processor 2102 provides an indication of this finding to the feedback generator 2106, which provides a positive report to a client device (e.g., a commissioning device as described above) for displaying to the administrator via the user interface, indicating that the devices are positioned well, which corresponds to step S1808.

If, however, the criterion is not met, the characteristic processor 2102 determines an action required to meet the criterion at step S1810. As described above, the configuration criterion database 2104 may store possible actions for improving the system. The action is passed to the feedback generator 2106, which provides a negative report to the commissioning device for displaying to the administrator via the user interface, indicating that the devices are not positioned well and providing the suggested action, which corresponds to step S1812. This action may also be referred to herein as a reconfiguration instruction.

In this case, the process returns to step S1804, such that the signal characteristics continue to be determined and compared to the criterion until it is determined that the device is in a good location.

Alternatively, following the negative report provided to the administrator, step S1804 may only be actioned once the administrator has moved the device and provided an indication via the user interface that the device has been moved. For example, the user may select an object on the interface which indicates that the device has been moved to a new location. After the user selection, the signal characteristics are again analysed to determine if the new location is suitable.

The administrator is considered to have altered the physical configuration such that the devices are in a second physical configuration. The possible changes include moving one or more devices to a different location, rotating one or more devices, and changing the Wi-Fi channel.

An example of the signal characteristic set out above is RSSI, with a criterion that the RSSI should be in the range of -70 to -75. That is, if the characteristic data is a received signal strength indication (RSSI), the criterion may be that the RSSI value must be within the range of -70 to -75. It will be appreciated that the criteria described herein are provided by way of example only. The criterion used may be dependent on, for example, the room in which the devices in communication are located. An RSSI of about -50 might be preferred if the devices are in the same room, for example.

The configuration criterion database 2104 may also store a possible solution for meeting the criterion. Following on from the example set out above, the possible solution stored at the database 104 may be: if the RSSI is greater than -70, move devices apart; if the RSSI is less than -75, move devices closer together.

Another example signal characteristic is Wi-Fi round-trip-time (RTT). The Wi-Fi RTT can be used to calculate the distance between the devices by measuring the time taken for packets to travel from one device to another. The criterion in this instance may be a predefined time range or predefined distance range.

Another example signal characteristic is the signal-to-noise ratio (SNR) of the Wi-Fi environment. Wi-Fi channels may be congested. The criterion may be a threshold SNR above which the SNR must be in order to be acceptable. The action, in this case, to be implemented to improve the system is that of switching the Wi-Fi network to another channel. This will have the effect of improving not only the Wi-Fi sensing quality but also the overall Wi-Fi performance at home.

A further example of a signal characteristic is CSI. The CSI is used in conjunction with a user indication to compare detected presence or motion with actual presence or motion. In such an embodiment, the method of Figure 18 is altered to include additional steps. At step S1804, the CSI of the received signal is determined and compared to the CSI fingerprint or the CSI of a previous time window. Comparison to the CSI fingerprint can be used to detect presence, while the CSI of a previous, but recent, time window can be used to detect motion.

If it does not match, the sensing system detects presence or motion. The characteristic processor 2102 provides an indication that there is a person present to the feedback generator 2106, which generates a user interface at the commissioning device requesting user feedback to indicate if there is in fact a person or pet present which has moved.

If the administrator provides an indication that there was real motion, the criterion is met, where the criterion is that there is motion where motion is detected by the signal.

If, however, the administrator provides an indication that there was no motion, the criterion is not met and the administrator is provided with feedback to this effect (steps S1810 and S1812).

In some embodiments, there is a predefined level of motion required to be detected. The criteria may, in this instance, be both that the user has indicated motion and that the detected motion exceeds the predefined level. If the predefined level is not exceeded but some motion is detected, the position of the devices is not optimal as the response received from the system is quite weak and therefore some motion may go unnoticed.

In some examples, the method comprises determining a localisation context for the sensing system, the localisation context optionally selected from a group comprising professional buildings and domestic buildings.

In some examples, the method comprises determining an installation context for the sensing system, the installation context optionally selected from an end user of the system and a third party installer.

In some examples, the method comprises determining the role of one or more user of the system, wherein a user is optionally an invited user by an administrator, and wherein the role is optionally selected from a group comprising an administrator, a steward and a family member.

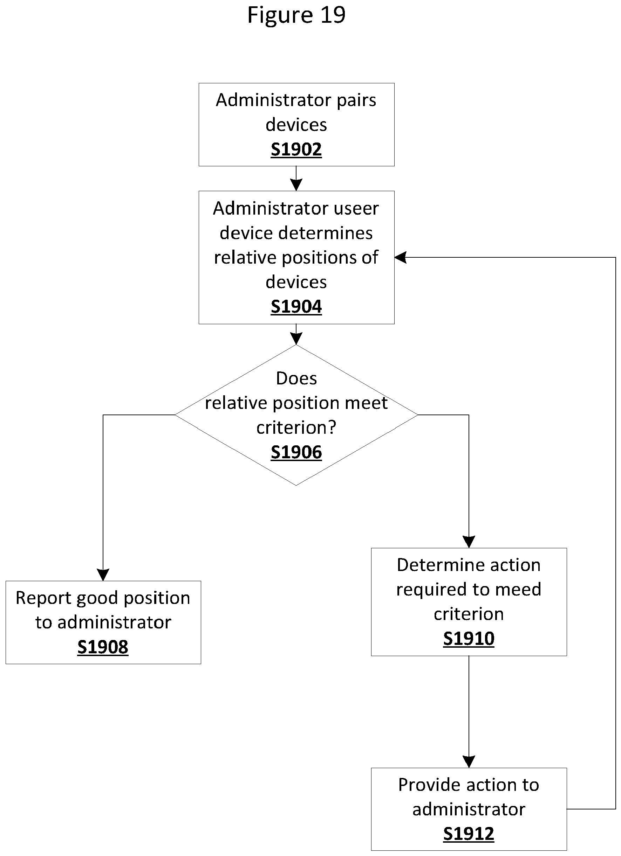

As set out above, the commissioning device may instead be used to determine if the position of the devices is optimal. Figure 19 provides an example method for using the commissioning device during optimisation.

At step S1902, the administrator places the devices in the place in the first physical configuration. The devices need not be paired for this method.

At step S1904, the administrator uses the commissioning device to determine the relative locations of the devices. The relative locations may be provided to the characteristics processor 2102, which determines if the criterion is met, step S1906. The criterion may be, for example, a predefined distance range between a pair of devices.

If it is determined that the criterion is met, the devices in communication are in the preferred locations for sensing. The characteristic processor 2102 provides an indication of this finding to the feedback generator 2106, which provides a positive report to the commissioning device for displaying to the administrator via the user interface, indicating that the devices are positioned well, step S1908.

If, however, the criterion is not met, the characteristic processor 2102 determines an action required to meet the criterion at step S1910. As described above, the configuration criterion database 2104 may store possible actions for improving the system. The action is passed to the feedback generator 2106, which provides a negative report to the commissioning device for displaying to the administrator via the user interface, indicating that the devices are not positioned well and providing the suggested action, which corresponds to step S1912.

In this case, the process returns to step S1902, where the administrator moves at least one device such that the devices are in the second physical configuration, and starts the process again.

The method of Figure 19 may be repeated until a positive report is provided to the administrator.

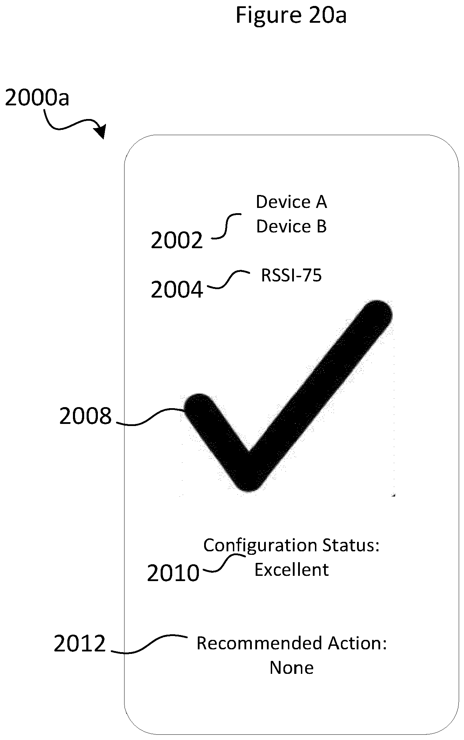

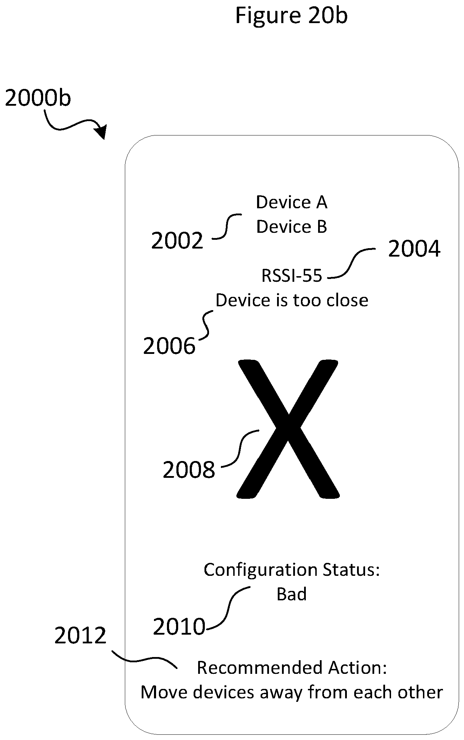

Figures 20A and 20B show negative and positive user interfaces 800a, 800b respectively. On each display, there is a device indicator 2002, indicating the devices which are optimised, a configuration status indicator 2010, a recommended action 2012, and a graphic indicator 2008.

In the embodiment of Figures 20A and 20B, the signal characteristic is the RSSI. There is also provided a signal characteristic indicator 2004, which provides the user with the RSSI.

The negative user interface 2000b also provides the user with a problem indicator 2006, which informs the user of the reason the positioning of the devices is not optimal.

The negative user interface 2000b is provided to the user if is it determined that the configuration criterion is not met. In this example, devices A and B, as indicated in the device indicator 2002, are being considered. The RSSI has been found to be -55, as indicated by the signal characteristic indicator 2004, such that the devices are too close, provided by the problem indicator 2006. The graphic indicator 2008 is a cross and may be shown in red, for example. The configuration status indicator 810 states that the status is "bad", corresponding to the fact that the criterion has not been met, and the recommended action 2012 is to "move the devices away from each other".

Once the configuration criterion has been met, the positive user interface 2000a is provided to the administrator via the commissioning device.

Again, devices A and B are considered as indicated in the device indicator 2002. Now, the RSSI has been found to be -75, as indicated by the signal characteristic indicator 2004. The graphic indicator 2008 is a tick and may be shown in green, for example. The configuration status indicator 2010 states that the status is "excellent", corresponding to the fact that the criterion has been met, and the recommended action 2012 is "none".

It will be appreciated that the user interfaces 2000a, 2000b may provide one or more of the above-mentioned indicators to provide the administrator with feedback pertaining to the current configuration of the devices. Once the devices have positioned, the Wi-Fi sensing network 2102 may be continuously or periodically monitored to identify faults or changes.

Exemplary methods, systems, and devices for configuring a system as described above may correspond to the following examples.

A first example provides a computer-implemented method of configuring a sensing system for monitoring a place, the system comprising a plurality of network devices located in the place and including at least one network device configured as a transmitter to transmit wireless signals over one or more wireless channel and at least one network device configured as a receiver to receive wireless signals transmitted in the place and subject to disturbance by the place, the method comprising:
transmitting wireless signals from the transmitter;
detecting disturbed wireless signals at the receiver;
determining from the disturbed wireless signals a characteristic of a first physical configuration of the network devices;
providing to a user, via a user interface of a client device associated with the user, feedback based on the characteristic of the first physical configuration;
detecting that a second physical configuration has been implemented in response to the feedback; and
determining a characteristic of a second physical configuration.

In some examples, the wireless signals are one or more of WiFi signals, signals used in telecommunication environments including WCDMA (wide band code division multiple access), LTE (long term evolution) and telecommunication signals according to the third generation, fourth generation and fifth generation protocols (3G, 4G and 5G), and Bluetooth.

In some examples, the method further comprises determining if the characteristic of the first physical configuration meets a configuration criterion, wherein the feedback is provided based on whether the characteristic of the first physical configuration meets the criterion, and if not determining a reconfiguration instruction for changing from the first physical configuration to the second physical configuration, the reconfiguration instruction being based on a physical change required for meeting the configuration criterion, wherein the feedback is the reconfiguration instruction.

In some examples, the method further comprises providing to the user, via a user interface, feedback based on the characteristic of the second physical configuration.

In some examples, the characteristic of the first physical configuration is a signal characteristic of a first received signal and the characteristic of the second physical configuration is a signal characteristic of a second received signal, wherein the first and second received signals are received the receiver.

In some examples, the feedback comprises an indication of the signal characteristic of the first received signal.

In some examples, the method further comprises determining a second characteristic of the first received signal, wherein the feedback is based on the second characteristic.

In some examples, the signal characteristic is at least one of RSSI, a signal-to-noise ratio, a WiFi round-trip-time, and channel state information.

In some examples, the signal characteristic is channel state information and the method further comprises determining if the characteristic of the first physical configuration meets a configuration criterion, wherein the feedback is provided based on whether the characteristic of the first physical configuration meets the criterion, wherein the configuration criterion defines that the channel state information of the received signal matches channel state information of a characteristic signal representative of the place, wherein the feedback provided comprises a request for the user to confirm movement of an entity in a path of the first received signal and, upon receiving a confirmation of the movement from the user via the user interface, at least one of an indication of a quality of the first signal and a reconfiguration instruction.

In some examples, the method further comprises determining if the characteristic of the first physical configuration meets a configuration criterion, wherein the feedback is provided based on whether the characteristic of the first physical configuration meets the criterion, wherein configuration criterion comprises the signal characteristic of the first received signal being substantially similar to the signal characteristic of a past signal received at the receiver.

In some examples, the method further comprises determining a second characteristic of the first and second physical configurations based on data collected by the client device, wherein the the data collected by the client device comprises (i) at least one of location and movement data corresponding to a location of the transmitter and the receiver, wherein the method further comprises determining a distance between the transmitter and the receiver based on the collected data or (ii) LiDAR data, wherein the method further comprises determining a distance between the transmitter and the receiver based on the LiDAR data.

In some examples, the first physical configuration comprises one of:
the transmitter and the receiver in a first relative position, and the second physical configuration comprises the transmitter and the receiver in a second relative position; a first transmitter-receiver pair comprising the transmitter and the receiver, and the second physical configuration comprises a second transmitter-receiver pair, wherein one of the transmitter and the receiver is the same in the first and second pairs and the other of the transmitter and the receiver is different in the first and second pairs; and comprises the transmitter and receiver communicating over a first network channel, and the second physical configuration comprises the transmitter and receiver communicating over a second network channel.

In some examples, the method comprises determining a localisation context for the sensing system, the localisation context optionally selected from a group comprising professional buildings and domestic buildings.

In some examples, the method comprises determining an installation context for the sensing system, the installation context optionally selected from an end user of the system and a third party installer.

In some examples, the method comprises determining the role of one or more user of the system, wherein a user is optionally an invited user by an administrator, and wherein the role is optionally selected from a group comprising an administrator, a steward and a family member.

A second example provides a computing device for configuring a sensing system for monitoring a place, the system comprising a plurality of network devices located in the place and including at least one network device configured as a transmitter to transmit wireless signals over one or more wireless channel and at least one network device configured as a receiver to receive wireless signals transmitted in the place and subject to disturbance by the place, the computing device comprising:
at least one processor; and
a memory storing instructions, which, when implemented on the at least one processor, cause the at least one processor to:
   determining, from disturbed wireless signals received at the receiver, a characteristic of a first physical configuration of the network devices;
   providing to a user, via a user interface of a client device associated with the user, feedback based on the characteristic of the first physical configuration;
   detecting that a second physical configuration has been implemented in response to the feedback and
   determining a characteristic of a second physical configuration.

A third example provides a computer program, stored on a non-transitory computer-readable storage media, and configured when executed on one or more processors, to:
determine, from disturbed wireless signals received at the receiver, a characteristic of a first physical configuration of the network devices;
provide to a user, via a user interface of a client device associated with the user, feedback based on the characteristic of the first physical configuration;
   detect that a second physical configuration has been implemented in response to the feedback and
determine a characteristic of a second physical configuration.

A fourth example provides a sensing system for monitoring a place, the system comprising:
a plurality of mesh devices located in the place and including at least one mesh device configured as a receiver and at least one mesh device configured as a transmitter; and
a computing device according to claim 16.

Certain elements described to exemplify the invention may be modified or substituted with different features without deviating from the inventive concept. For example, whilst the description relates in particular to implementing a Wi-Fi sensing mesh by the first radio module, it will be appreciated that other Wi-Fi sensing system architectures may be configured.

As explained earlier, a distinction should be made between references to Wi-Fi sensing and general references to 'Wi-Fi connection', 'Wi-Fi networks', and the like. Wi-Fi networks may be established to provide wireless connection to a network such as the internet. Wi-Fi sensing may instead refer to use of radio signals under a Wi-Fi communication protocol to detect motion in an environment, by understanding characteristics of Wi-Fi signals received from the environment. Wi-Fi sensing does not necessarily imply that a Wi-Fi network for internet access is provided in the environment and the presence of a Wi-Fi network does not imply a Wi-Fi sensing functionality.

Furthermore, a distinction should be made between the second radio communication protocol, as referred herein, and other communication links that may be established for communication between, for example, a border router and an access point, or between a user device (e.g., commissioning device) and a central Wi-Fi sensing device. That is, communication via Bluetooth, for example, may be enabled between a commissioning device and Wi-Fi sensing devices during commissioning, or in examples where no Wi-Fi network connection is available. However, this Bluetooth connection between Wi-Fi sensing module and user device or access point is not a communication link under the second radio communication protocol.

The present disclosure provides a device comprising first and second radio communication module, the first operating under a Wi-Fi protocol, the second operating under a non-Wi-Fi radio protocol. This enables separation of Wi-Fi sensing functionality with data transfer, network access, and other loT functions. These features are advantageous in that signals transmitted for providing a Wi-Fi sensing function do not compete for airtime with signals transmitted for other data communication purposes, e.g., loT functions, as these functionalities are implemented over a different, non-Wi-Fi radio protocol. The devices described herein may transmit and receive signals for Wi-Fi sensing and data communication purposes, with minimal degradation to either function as a result of interference from signals transmitted to implement the other.

In some topologies where internet connection is enabled, only one Wi-Fi sensing device may need to be connected to an access point (e.g., via a router and/or station device). In some topologies, the system may operate locally if the internet network is unavailable or internet connection is not available.

In comparison to Wi-Fi only topologies, e.g., systems which do not leverage a second, non-Wi-Fi protocol for transmitting communication data between devices, examples of the present disclosure above provide advantages in connection reliability, ease of setup, and in sensing fidelity.

## Claims

1. A Wi-Fi sensing module for use in an environment comprising at least two Wi-Fi sensing modules, the Wi-Fi sensing module comprising:
a first radio communication module configured to operate under a Wi-Fi communication protocol to transmit and receive Wi-Fi sensing data between the Wi-Fi sensing module and an environment in which the Wi-Fi sensing module is located;
a second radio communication module configured to operate under a second radio communication protocol to transmit and receive communication data between the Wi-Fi sensing module and the environment, wherein the second radio communication protocol is not a Wi-Fi protocol; and
one or more processor configured to:
execute Wi-Fi sensing software for processing Wi-Fi sensing data that conforms to the Wi-Fi communication protocol, for the purpose of detecting presence and/or motion in an environment in which the Wi-Fi sensing module is located; and
execute wireless communication software for processing communication data that conforms to the second radio communication protocol, for the purpose of establishing a communication link for exchanging communication data with one or more second Wi-Fi sensing module in the environment.

2. The Wi-Fi sensing module of claim 1, wherein the one or more processor is configured to execute the Wi-Fi sensing software to generate intermediate sensing data, and to transmit the intermediate data via the second radio communication module for processing by a central device.

3. The Wi-Fi sensing module of any preceding claim, wherein the first radio communication module comprises the one or more processor.

4. The Wi-Fi sensing module of any preceding claim, wherein the second radio communication module is configured to process communication data that conforms to the second radio communication protocol, for the purpose of configuring a Wi-Fi channel under which the first radio communication module operates.

5. The Wi-Fi sensing module of any preceding claim, wherein the second radio communication module is configured to process communication data that conforms to the second radio communication protocol, for the purpose of configuring a beaconing rate of Wi-Fi sensing data transmitted by the first radio communication module.

6. The Wi-Fi sensing module of any preceding claim, installed in a plug socket or switch.

7. The Wi-Fi sensing module of any preceding claim, wherein the second protocol is selected from a Thread, Zigbee, Cellular, LoraWAN, BACnet, Dali, KNX, Sigfox, or Z-wave radio communication protocol.

8. A Wi-Fi sensing system for detecting presence and/or motion in an environment comprising:
a plurality of Wi-Fi sensing modules, according to any of claims 1-7;
each Wi-Fi sensing device having an established communication link for transmitting and receiving communication data that conforms to the second radio communication protocol with at least one other Wi-Fi sensing module.

9. The Wi-Fi sensing system according to claim 8, wherein the plurality of Wi-Fi sensing devices are physically located in one of a plurality of zones in the environment, each zone comprising at least one Wi-Fi sensing device;
wherein a communication link under the second radio protocol is established between each Wi-Fi sensing device in each zone; and
wherein at least one Wi-Fi sensing device in each zone has an established communication link under the second communication protocol with at least one Wi-Fi sensing device in another zone of the plurality of zones.

10. The Wi-Fi sensing system according to any of claims 8 or 9, wherein the system comprises a hub device in communication with a service, the service accessible via a network;
wherein at least one Wi-Fi sensing device of the plurality is communicatively coupled with the hub device.

11. The Wi-Fi sensing system of claim 10, wherein the at least one Wi-Fi sensing device of the plurality is communicatively coupled with the hub device via a wired connection operating under an ethernet protocol.

12. The Wi-Fi sensing system according to claim 10, wherein the at least one Wi-Fi sensing device communicatively coupled with the hub device is communicatively coupled by a radio communication protocol selected from: a Wi-Fi communication protocol, 3G, 4G, 5G, Z-wave, Zigbee, LoraWAN, BACnet, Dali, KNX, Sigfox or a SubGHz radio protocol.

13. The Wi-Fi sensing system according to claim 10, wherein the service comprises a cloud service accessible to the hub device via the internet.

14. The Wi-Fi sensing system according to claim 8 or 9, wherein the system is a local system wherein none of the plurality of Wi-Fi sensing modules is configured for external communications externally of the environment.

15. The Wi-Fi sensing system according to any of claims 8-14, further comprising an accessory device having an established communication link with at least one of the Wi-Fi sensing devices under the second radio protocol, the accessory device configured to implement an accessory function responsive to an instruction received at the accessory device as communication data that conforms to the second radio communication protocol.

16. The Wi-Fi sensing system of claim 15, wherein the accessory device comprises one of:
a security siren ;
a contact sensor;
a vibration sensor;
a humidity or temperature sensor;
a leak detector; and
a thermostat device configured to control a heating system of the environment.

17. A computer implemented method of configuring a Wi-Fi sensing system for monitoring a place, the system comprising a plurality of Wi-Fi sensing modules in accordance with any of claims 1-7 located in the place, the method comprising:
commissioning a Wi-Fi sensing network in the place by:
transmitting a Wi-Fi signal from a first Wi-Fi sensing module of the plurality;
detecting disturbed Wi-Fi signals at a second Wi-Fi sensing module of the plurality;
determining from the disturbed wireless signals a characteristic of a first physical configuration of the Wi-Fi sensing modules;
providing to a user, via a user interface of a commissioning device associated with the user, feedback based on the characteristic of the first physical configuration;
detecting that a second physical configuration has been implemented in response to the feedback; and
determining a characteristic of a second physical configuration; and
commissioning a communication network under the second radio communication protocol between the plurality of Wi-Fi sensing modules in the place by:
receiving, via a commissioning device, network credentials for a network operating under the second communication protocol;
establishing a communication link between the commissioning device and each Wi-Fi sensing module of the plurality; and
sharing the network credentials with each Wi-Fi sensing module.

18. A computer program product comprising computer-readable instructions which, when executed by one or more processor a computing device causes the one or more processor to implement the method of claim 17.
